(19)

Europäisches
Patentamt
European
Patent Office
Office européen
des brevets

(11) **EP 2 781 949 A1**

(12) **EUROPEAN PATENT APPLICATION**

(43) Date of publication:
**24.09.2014 Bulletin 2014/39**

(51) Int Cl.:
**G02B 26/08** (2006.01)

(21) Application number: **14159822.7**

(22) Date of filing: **14.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.03.2013 JP 2013055730**

(71) Applicant: **Seiko Epson Corporation**
**Tokyo 163 (JP)**

(72) Inventor: **Shimizu, Takeshi**
**Nagano, 392-8502 (JP)**

(74) Representative: **HOFFMANN EITLE**
**Patent- und Rechtsanwälte**
**Arabellastrasse 4**
**81925 München (DE)**

(54) **Optical scanner, image display apparatus, and head mounted display**

(57)     An optical scanner (1) includes a movable section (111), a frame body section (13), a first shaft section (12a, 12b) configured to connect the movable section (111) and the frame body section (13), a fixed section (15), and a second shaft section (14a, 14b) configured to connect the frame body section (13) and the fixed section (15) ; a distortion detecting element (51, 52) arranged at an end on the frame body section side of the second shaft section (14a, 14b) or in any one of the movable section (111), the frame body section (13), and the first shaft section (12a, 12b), and configured to detect deformation of the second shaft section (14a, 14b) ; a first signal processing section (71) configured to receive a detection signal of the distortion detecting element (51, 52) and output a signal based on bending deformation of the second shaft section (14a, 14b), and a second signal processing section (72) configured to receive a detection signal of the distortion detecting element (51, 52) and output a signal based on torsional deformation of the second shaft section (14a, 14b).

FIG. 1

EP 2 781 949 A1

**Description**

<u>BACKGROUND</u>

1. Technical Field

The present invention relates to an optical scanner, an image display apparatus, and a head mounted display.

2. Related Art

For example, there is known an optical scanner used in a projector, a head mounted display, or the like to two-dimensionally scan light (see, for example, JP-A-2003-207737 (Patent Literature 1).

For example, the optical scanner described in Patent Literature 1 includes an outer frame (a fixed section), an inner frame (a frame body section) provided on the inner side of the outer frame, a pair of second elastic beams (second shaft sections) configured to pivotably support the inner frame with respect to the outer frame, a mirror section (a movable section) provided on the inner side of the inner frame, and a pair of first elastic beams (first shaft sections) configured to pivotably support the mirror section with respect to the inner frame.

The optical scanner pivots the inner frame with respect to the outer frame while torsionally deforming the second elastic beams and pivots the mirror section with respect to the inner frame while torsionally deforming the first elastic beams to thereby two dimensionally scan light reflected by the mirror section.

In the optical scanner described in Patent Literature 1, piezo-resistors are arranged at ends on the outer frame side of the second elastic beams between the inner frame and the outer frame. Consequently, it is possible to detect pivoting of the inner frame and the mirror section due to the torsional deformation of the second elastic beams on the basis of a resistance value change of the piezo-resistors.

The piezo-resistors have a temperature characteristic that response sensitivity to stress changes according to a temperature change.

On the other hand, in the optical scanner described in Patent Literature 1, the piezo-resistors are arranged at the ends on the outer frame side of the second elastic beams. Therefore, when the outer frame is supported and set, external heat is transmitted to the outer frame and the piezo-resistors are easily affected by the external heat.

Therefore, the temperature of the piezo-resistors and the temperature of main portions of the second elastic beams where the torsional deformation occurs are different. Deterioration in detection accuracy of the piezo-resistors is caused by the temperature characteristic of the piezo-resistors.

<u>SUMMARY</u>

An advantage of some aspects of the invention is to provide an optical scanner that can detect the behavior of a movable section using a distortion detecting element while suppressing the influence of external heat on the distortion detecting element and provide an image display apparatus and a head mounted display excellent in reliability including the optical scanner.

The invention is directed to an optical scanner including the features of claim 1.

With the optical scanner, it is possible to detect the behavior around the first axis of the movable section on the basis of the signal output from the first signal processing section. It is possible to detect the behavior around the second axis of the movable section on the basis of the signal output from the second signal processing section. The distortion detecting element is arranged at the end on the frame body section side of the second shaft section or in any one of the movable section, the frame body section, and the first shaft section. Therefore, it is possible to suppress the influence of external heat via the fixed section on the distortion detecting element.

In the optical scanner, it is preferable that the distortion detecting element includes: a piezo-resistance region; and a pair of terminals arranged side by side in a direction inclining with respect to a longitudinal direction of the second shaft section on the piezo-resistance region.

With this configuration, it is possible to increase the signals respectively based on the bending deformation and the torsional deformation of the second shaft section included in the signal output from the distortion detecting element.

In the optical scanner, it is preferable that a pair of the second shaft sections is provided across the frame body section, and the distortion detecting element is arranged in each of the pair of second shaft sections.

With this configuration, it is possible to efficiently extract each of the signal based on the bending deformation of the second shaft section and the signal based on the torsional deformation of the second shaft section from detection signals of a pair of the distortion detecting elements.

In the optical scanner, it is preferable that the distortion detecting element includes a first distortion detecting element arranged at an end on the frame body section side of the second shaft section or in any one of the movable section, the frame body section, and the first shaft section, and a second distortion detecting element arranged at the end on the frame body section side of the second shaft section or in any one of the movable section, the frame body section, and the first shaft section; and that the first signal processing section is configured to receive a detection signal of the first distortion detecting element and output a signal based on bending deformation of the second shaft section, and the second signal processing section is configured to receive a detection signal of the second distortion detecting element and output a signal based on torsional deformation of the second shaft section.

With this configuration, it is possible to detect the behavior around the first axis of the movable section on the basis of the signal output from the first signal processing section. It is possible to detect the behavior around the second axis of the movable section on the basis of the signal output from the second signal processing section. The first distortion detecting element and the second distortion detecting element are arranged at the end on the frame body section side of the second shaft section or in any one of the movable section, the frame body section, and the first shaft section. Therefore, it is possible to suppress the influence of external heat via the fixed section on the first distortion detecting element and the second distortion detecting element.

In the optical scanner, it is preferable that the first distortion detecting element is arranged at the end on the frame body section side of the second shaft section and detects deformation of the second shaft section.

With this configuration, it is possible to suppress heat due to light made incident on the movable section from affecting the first distortion detecting element. Since it is unnecessary to provide, in the first shaft section, a distortion resistance element used for detection of the behavior around the first axis of the movable section, it is possible to improve a degree of freedom of design of the first shaft section.

In the optical scanner, it is preferable that the first distortion detecting element includes: a piezo-resistance region formed in a longitudinal shape extending in a direction along a longitudinal direction of the second shaft section; and a pair of terminals arranged side by side in the direction along the longitudinal direction of the second shaft section on the piezo-resistance region.

With this configuration, it is possible to increase the signal based on bending deformation of the second shaft section included in the signal output from the first distortion detecting element.

In the optical scanner, it is preferable that the optical scanner detects the behavior around the first axis of the movable section on the basis of the signal output from the first signal processing section.

With this configuration, it is possible to control, on the basis of the detected behavior, the behavior around the first axis of the movable section to be a desired state and synchronize the behavior around the first axis of the movable section and the operations of other devices.

In the optical scanner, it is preferable that the optical scanner estimates, using an observer, the behavior around the first axis of the movable section on the basis of the signal output from the first signal processing section.

With this configuration, even if swinging around the first axis of the movable section is not in a resonant state, it is possible to detect the behavior around the first axis of the movable section on the basis of the signal output from the first signal processing section.

In the optical scanner, it is preferable that the optical scanner estimates the behavior around the first axis of the movable section on the basis of the signal output from the first signal processing section using a ratio of the amplitude in a resonance frequency concerning swinging around the first axis of the movable section and the amplitude in a resonance frequency concerning swinging around the first axis of the frame body section.

With this configuration, it is possible to highly accurately detect, with a relatively simple configuration, the behavior around the first axis of the movable section on the basis of the signal output from the first signal processing section.

In the optical scanner, it is preferable that the second distortion detecting element is arranged at the end on the frame body section side of the second shaft section and detects deformation of the second shaft section.

With this configuration, it is possible to suppress heat due to light made incident on the movable section from affecting the second distortion detecting element. Since it is unnecessary to provide, in the first shaft section, a distortion resistance element used for detection of the behavior around the second axis of the movable section, it is possible to improve a degree of freedom of design of the first shaft section.

In the optical scanner, it is preferable that the optical scanner detects the behavior around the second axis of the movable section on the basis of the signal output from the second signal processing section.

With this configuration, it is possible to control, on the basis of the detected behavior, the behavior around the second axis of the movable section to be a desired state and synchronize the behavior around the second axis of the movable section and the operations of other devices.

The invention is also directed to an image display apparatus including: the optical scanner according to any one of the above aspects; and a light source configured to emit light. The image display apparatus reflects, with the light reflecting section, the light emitted from the light source and displays an image.

With this configuration, it is possible to provide the image display apparatus having excellent reliability.

The invention is further directed to a head mounted display including: the optical scanner according to any one of the above aspects; and a light source configured to emit light. The head mounted display reflects, with the light reflecting section, the light emitted from the light source and displays an image.

With this configuration, it is possible to provide the head mounted display having excellent reliability.

BRIEF DESCRIPTION OF THE DRAWINGS

The invention will be described with reference to the accompanying drawings, wherein like numbers reference like elements.

Fig. 1 is a plan view showing an optical scanner according to a first embodiment of the invention.

Fig. 2 is a sectional view (a sectional view taken along an X axis) of the optical scanner shown in Fig. 1.

Fig. 3 is a block diagram showing a control system of the optical scanner shown in Fig. 1.

Fig. 4 is a block diagram for explaining a voltage applying section of a driving section included in the optical scanner shown in Fig. 1.

Figs. 5A and 5B are diagrams showing an example of generated voltages in a first voltage generating section and a second voltage generating section shown in Fig. 4.

Fig. 6 is a diagram for explaining a first distortion detecting element of the optical scanner shown in Fig. 1.

Fig. 7 is a diagram for explaining a second distortion detecting element of the optical scanner shown in Fig. 1.

Fig. 8A is a graph showing a frequency characteristic concerning a ratio of torque around a first axis applied to a frame body section and a swing angle around a Y axis of a movable section and the frame body section.

Fig. 8B is a graph showing a frequency characteristic concerning a phase difference between the torque around the first axis applied to the frame body section and swinging around the first axis of the movable section and the frame body section.

Fig. 9A is an enlarged graph of the vicinity of a resonance frequency shown in Fig. 8A.

Fig. 9B is an enlarged graph of the vicinity of a resonance frequency shown in Fig. 8B.

Fig. 10 is a plan view showing an optical scanner according to a second embodiment of the invention.

Fig. 11 is a block diagram showing a control system of the optical scanner shown in Fig. 10.

Fig. 12 is a diagram for explaining a distortion detecting element of the optical scanner shown in Fig. 10.

Fig. 13 is a diagram for explaining a relation between the posture of a distortion detecting element of a two-terminal type and a crystal orientation of silicon.

Figs. 14A and 14B are graphs showing a relation between the posture (an angle $\alpha$) of the distortion detecting element of the two-terminal type, in which p-type silicon is used for a piezo-resistance region, and an absolute value of a resistance value change ratio due to tensile stress and shearing stress.

Figs. 15A and 15B are graphs showing a relation between the posture (the angle $\alpha$) of the distortion detecting element of the two-terminal type, in which n-type silicon is used for the piezo-resistance region, and an absolute value of a resistance value change ratio due to tensile stress and shearing stress.

Figs. 16A and 16B are graphs showing a relation between the posture (the angle $\alpha$) of the distortion detecting element of the two-terminal type and a ratio of an absolute value of a resistance value change ratio due to tensile stress and shearing stress.

Fig. 17 is a plan view showing an optical scanner according to a third embodiment of the invention.

Fig. 18 is a diagram for explaining a distortion detecting element of the optical scanner shown in Fig. 17.

Figs. 19A and 19B are graphs showing a relation between the posture (an angle $\alpha$) of a distortion detecting element of a four-terminal type, in which p-type silicon is used for a piezo-resistance region, and an absolute value of a resistance value change ratio due to tensile stress and shearing stress.

Figs. 20A and 20B are graphs showing a relation between the posture (the angle $\alpha$) of the distortion detecting element of the four-terminal type, in which n-type silicon is used for the piezo-resistance region, and an absolute value of a resistance value change ratio due to tensile stress and shearing stress.

Figs. 21A and 21B are graphs showing a relation between the posture (the angle $\alpha$) of the distortion detecting element of the four-terminal type and a ratio of an absolute value of a resistance value change ratio due to tensile stress and shearing stress.

Fig. 22 is a plan view showing an optical scanner according to a fourth embodiment of the invention.

Fig. 23 is a plan view showing an optical scanner according to a fifth embodiment of the invention.

Fig. 24 is a plan view showing an optical scanner according to a sixth embodiment of the invention.

Fig. 25 is a diagram schematically showing an embodiment of an image display apparatus according to the invention.

Fig. 26 is a block diagram showing a control system of the image display apparatus shown in Fig. 25.

Fig. 27 is a perspective view showing an application 1 of the image display apparatus according of the invention.

Fig. 28 is a perspective view showing an application example 2 of the image display apparatus according to the invention.

Fig. 29 is a perspective view showing an application example 3 of the image display apparatus according to the invention.

DESCRIPTION OF EXEMPLARY EMBODIMENTS

Preferred embodiments of the invention are explained below with reference to the accompanying drawings.

Optical scanner

First Embodiment

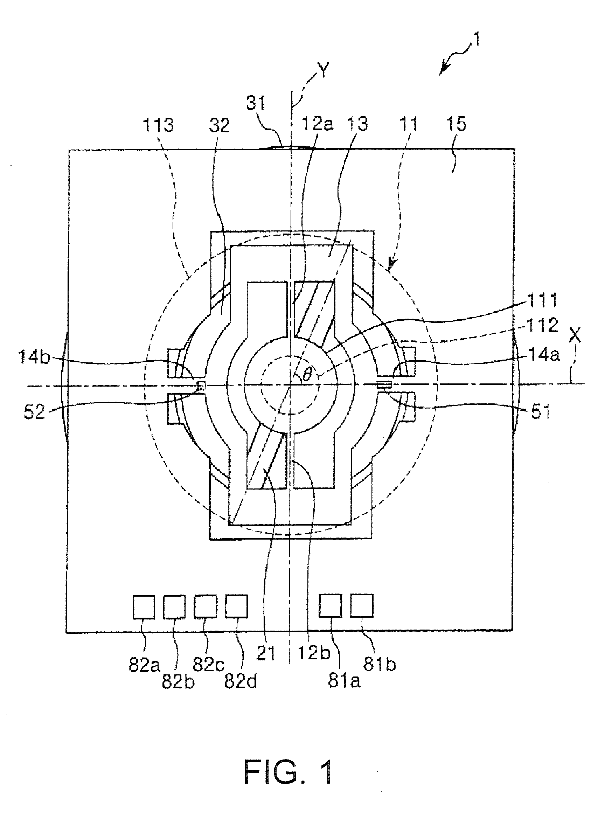

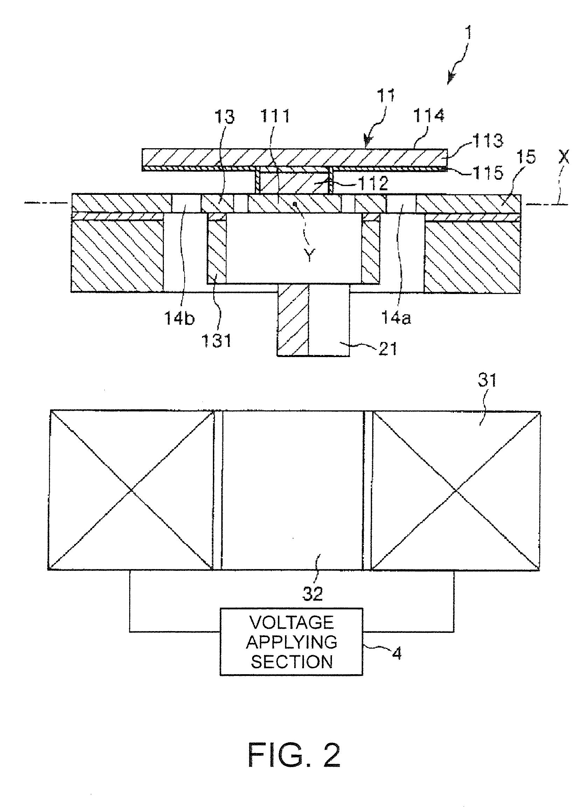

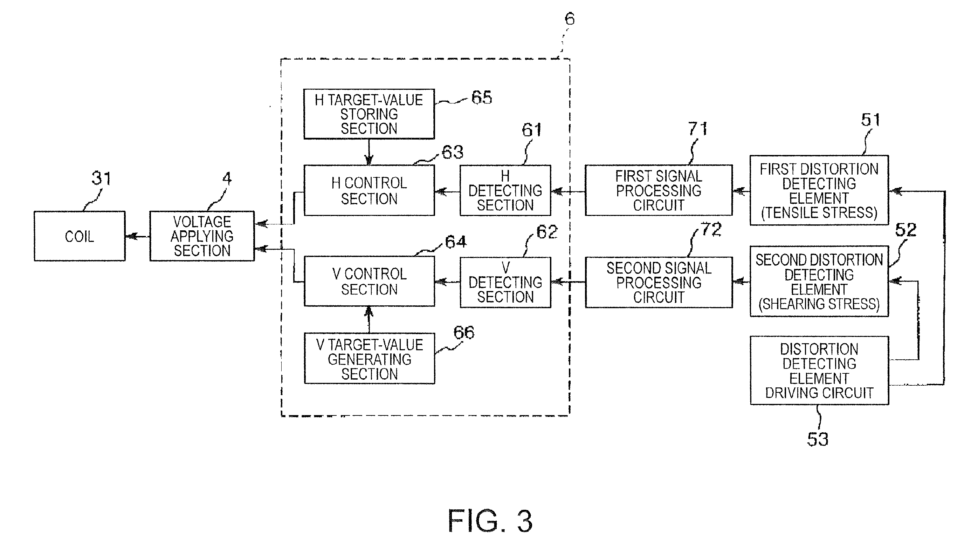

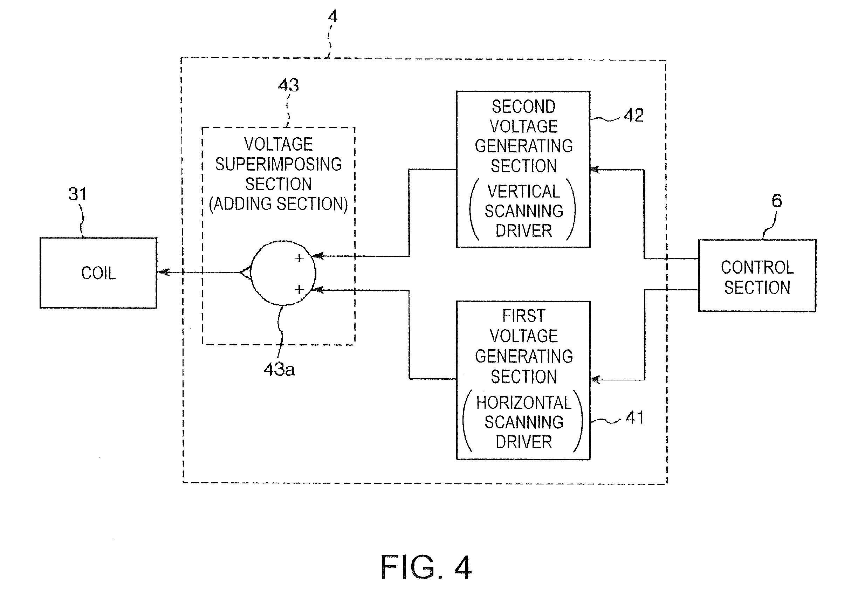

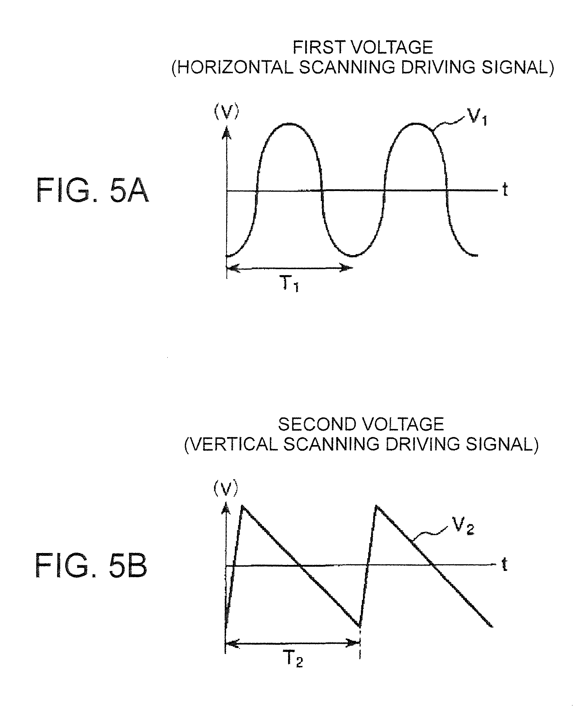

Fig. 1 is a plan view showing an optical scanner according to a first embodiment of the invention. Fig. 2 is a sectional view (a sectional view taken along an X axis) of the optical scanner shown in Fig. 1. Fig. 3 is a block diagram showing a control system of the optical scanner shown in Fig. 1. Fig. 4 is a block diagram for explaining a voltage applying section of a driving section included in the optical scanner shown in Fig. 1. Figs. 5A and 5B are diagrams showing an example of generated voltages in a first voltage generating section and a second voltage generating section shown in Fig. 4.
In the following explanation, for convenience of explanation, the upper side in Fig. 2 is referred to as "upper" and the lower side is referred to as "lower".
As shown in Figs. 1 and 2, an optical scanner 1 includes a movable mirror section 11, a pair of shaft sections 12a and 12b (first shaft sections), a frame body section 13, a pair of shaft sections 14a and 14b (second shaft sections), a fixed section 15, a permanent magnet 21, a coil 31, a magnetic core 32, a voltage applying section 4, a distortion detecting element 51 (a first distortion detecting element), and a distortion detecting element 52 (a second distortion detecting element).
The movable mirror section 11 and the pair of shaft sections 12a and 12b configure a first vibration system configured to swing (reciprocatingly pivot) around a Y axis (a first axis). The movable mirror section 11, the pair of shaft sections 12a and 12b, the frame body section 13, the pair of shaft sections 14a and 14b, and the permanent magnet 21 configure a second vibration system configured to swing (reciprocatingly pivot) around an X axis (a second axis).
The permanent magnet 21, the coil 31, and the voltage applying section 4 configure a driving section configured to drive the first vibration system and the second vibration system (i.e., swing the movable mirror section 11 around the X axis and the Y axis) according to mutual action of magnetic fields of the permanent magnet 21 and the coil 31.
In particular, in the optical scanner 1, the distortion detecting element 51 is arranged at an end on the frame body section 13 side of the shaft section 14a. A detection signal of the distortion detecting element 51 includes a signal based on bending deformation of the shaft section 14a. As shown in Fig. 3, the detection signal is input to a first signal processing circuit 71. The first signal processing circuit 71 outputs the signal based on the bending deformation of the shaft section 14a. The signal output from the first signal processing circuit 71 is input to the control section 6. The control section 6 detects the behavior around the Y axis of the movable mirror section 11 on the basis of the signal output from the first signal processing circuit 71. In this way, the control section 6 detects the behavior around the Y axis of the movable mirror section 11 using the signal based on the bending deformation of the shaft section 14a included in the detection signal of the distortion detecting element 51.
The distortion detecting element 52 is arranged at an end on the frame body section 13 side of the shaft section 14b. A detection signal of the distortion detecting element 52 includes a signal based on torsional deformation of the shaft section 14b. As shown in Fig. 3, the detection signal is input to a second signal processing circuit 72. The second signal processing circuit 72 outputs the signal based on the torsional deformation of the shaft section 14b. The signal output from the second signal processing circuit 72 is input to the control section 6. The control section 6 detects the behavior around the X axis of the movable mirror section 11 on the basis of the signal output from the second signal processing circuit 72.
In the optical scanner 1, since the distortion detecting elements 51 and 52 are arranged at the ends on the frame body section 13 sides of the shaft sections 14a and 14b, it is possible to suppress the influence of external heat via the fixed section 15 on the distortion detecting elements 51 and 52. The ends on the frame body section 13 sides of the shaft sections 14a and 14b refer to portions on the frame body section 13 side from the centers of the respective shaft sections 14a and 14b.
The sections of the optical scanner 1 are explained below in order in detail.
The movable mirror section 11 includes a base section (a movable section) 111 and a light reflection plate 113 fixed to the base section 111 via a spacer 112. The base section (the movable section) 111 has a function of capable of swinging (pivoting) with respect to the fixed section 15.
A light reflecting section 114 having light reflectivity is provided on the upper surface (one surface) of the light reflection plate 113.

The light reflection plate 113 is separated from the shaft sections 12a and 12b in the thickness direction of the light reflection plate 113. When viewed from the thickness direction (hereinafter also referred to as "plan view"), the light reflection plate 113 is provided to overlap the shaft sections 12a and 12b.

Therefore, it is possible to increase the area of the plate surface of the light reflection plate 113 while reducing the distance between the shaft section 12a and the shaft section 12b. Since the distance between the shaft section 12a and the shaft section 12b can be reduced, a reduction in the size of the frame body section 13 can be attained. Further, since the reduction in the size of the frame body section 13 can be attained, the distance between the shaft section 14a and the shaft section 14b can be reduced.

Consequently, even if the area of the plate surface of the light reflection plate 113 is increased, it is possible to attain a reduction in the size of the optical scanner 1.

The light reflection plate 113 is formed to cover the entire shaft sections 12a and 12b in plan view. In other words, the shaft sections 12a and 12b are respectively located on the inner sides with respect to the outer circumference of the light reflection plate 113 in plan view. Consequently, the area of the plate surface of the light reflection plate 113 increases. As a result, the area of the light reflecting section 114 can be increased. Further, it is possible to suppress unnecessary light (e.g., light that cannot be made incident on the light reflecting section 114) from being reflected on the shaft sections 12a and 12b and changing to stray light.

The light reflection plate 113 is formed to cover the entire frame body section 13 in plan view. In other words, the frame body section 13 is located on the inner side with respect to the outer circumference of the light reflection plate 113 in plan view. Consequently, the area of the plate surface of the light reflection plate 113 increases. As a result, the area of the light reflecting section 114 can be increased. Further, it is possible to suppress unnecessary light from being reflected on the frame body section 13 and changing to stray light.

Further, the light reflection plate 113 is formed to cover the entire shaft sections 14a and 14b in plan view. In other words, the shaft sections 14a and 14b are respectively located on the inner sides with respect to the outer circumference of the light reflection plate 113 in plan view. Consequently, the area of the plate surface of the light reflection plate 113 increases. As a result, the area of the light reflecting section 114 can be increased. Further, it is possible to suppress unnecessary light from being reflected on the shaft sections 14a and 14b and changing to stray light.

In this embodiment, the light reflection plate 113 is formed in a circular shape in plan view. The plan view shape of the light reflection plate 113 is not limited to this and may be, for example, an elliptical shape or a polygonal shape such as a square shape. When the plan view shape of the light reflection plate 113 is formed in a shape projecting in directions along the X axis and the Y axis, it is possible to efficiently reduce stray light in the shaft sections while suppressing an inertial moment of the light reflection plate 113.

A hard layer 115 is provided on the lower surface of the light reflection plate 113 (the other surface; a surface on the base section 111 side of the light reflection plate 113).

The hard layer 115 is made of a material harder than a material of a main body of the light reflection plate 113. Consequently, the rigidity of the light reflection plate 113 can be increased. Therefore, bending during pivoting of the light reflection plate 113 can be suppressed. Further, it is possible to reduce the thickness of the light reflection plate 113 and suppress an inertial moment during swinging around the X axis and the Y axis of the light reflection plate 113.

The material of the hard layer 115 is not particularly limited as long as the material is harder than the material of the main body of the light reflection plate 113. For example, diamond, crystal, sapphire, lithium tantalate, potassium niobate, a carbon nitride film, and the like can be used. In particular, it is preferable to use diamond.

The thickness (average thickness) of the hard layer 115 is not particularly limited. However, the thickness is preferably about 1 to 10 $\mu$m and more preferably about 1 to 5 $\mu$m.

The hard layer 115 may be formed by a single layer or may be formed by a laminated body of a plurality of layers. The hard layer 115 may be provided on the entire lower surface of the light reflection plate 113 or may be provided on a part of the lower surface. The hard layer 115 is provided according to necessity and can be omitted.

For the formation of the hard layer 115, for example, chemical vapor deposition methods (CVD) such as plasma CVD, thermal CVD, and laser CVD, dry plating methods such as vacuum evaporation, sputtering, and ion plating, wet plating methods such as electrolytic plating, immersion plating, and electroless plating, thermal spraying, and joining of a sheet-like member can be used.

The lower surface of the light reflection plate 113 is fixed to the base section 111 via the spacer 112. Consequently, it is possible to swing the light reflection plate 113 around the Y axis while suppressing contact with the shaft sections 12a and 12b, the frame body section 13, and the shaft sections 14a and 14b.

The base section 111 is located on the inner side with respect to the outer circumference of the light reflection plate 113 in plan view. The area in plan view of the base section 111 is preferably as small as possible if the base section 111 can support the light reflection plate 113 via the spacer 112. Consequently, it is possible to reduce the distance between the shaft section 12a and the shaft section 12b while increasing the area of the plate surface of the light reflection plate 113.

The frame body section 13 is formed in a frame shape and provided to surround the base section 111 of the movable mirror section 11. In other words, the base section 111 of the movable mirror section 11 is provided on the inner side of the frame body section 13 formed in the frame shape.

The frame body section 13 is formed in a shape formed along the external shape of a structure including the base section 111 of the movable mirror section 11 and the pair of shaft sections 12a and 12b. Consequently, it is possible to attain a reduction in the size of the frame body section 13 while allowing vibration of the first vibration system configured by the movable mirror section 11 and the pair of shaft sections 12a and 12b, that is, swinging around the Y axis of the movable mirror section 11.

The frame body section 13 includes a rib 131 projecting in the thickness direction of the frame body section 13 more than the shaft sections 12a and 12b and the shaft sections 14a and 14b. Deformation of the frame body section 13 can be reduced by the rib 131. The rib 131 also has a function of suppressing the movable mirror section 11 from coming into contact with the permanent magnet 21 (a function of a spacer).

The shape of the frame body section 13 is not limited to the shape shown in the figure as long as the shape is a frame shape.

The frame body section 13 has the length in the direction along a Y-axis direction longer than the length in the direction along the X axis. Consequently, it is possible to reduce the length of the optical scanner 1 in the direction along the X axis while securing length necessary for the shaft sections 12a and 12b.

The frame body section 13 is supported by the fixed section 15 via the shaft sections 14a and 14b. The base section 111 of the movable mirror section 11 is supported by the frame body section 13 via the shaft sections 12a and 12b.

The shaft sections 12a and 12b and the shaft sections 14a and 14b are elastically deformable.

The shaft sections 12a and 12b (the first shaft sections) connect the movable mirror section 11 and the frame body section 13 to enable the movable mirror section 11 to swing (pivot) around the Y axis (the first axis). The shaft sections 14a and 14b (the second shaft sections) connect the frame body section 13 and the fixed section 15 to enable the frame body section 13 to swing (pivot) around the X axis (the second axis) orthogonal to the Y axis.

More specifically, the shaft sections 12a and 12b are arranged to be opposed to each other via (across) the base section 111 of the movable mirror section 11.

The shaft sections 12a and 12b are formed in a longitudinal shape (a bar shape) extending in the direction along the Y axis. One ends of the shaft sections 12a and 12b are connected to the base section 111. The other ends of the shaft sections 12a and 12b are connected to the frame body section 13. The shaft sections 12a and 12b are arranged such that the center axes thereof coincide with the Y axis.

In this way, the shaft sections 12a and 12b support the base section 111 of the movable mirror section 11 from both sides. The shaft sections 12a and 12b are torsionally deformed according to the swinging around the Y axis of the movable mirror section 11.

The shape of the shaft sections 12a and 12b is not limited to the shape explained above as long as the shaft sections 12a and 12b supports the movable mirror section 11 pivotably around the Y axis with respect to the frame body section 13. For example, the shaft sections 12a and 12b may include, in at least one halfway place, a bent or curved portion, a divided portion, or a portion having different width.

The shaft sections 14a and 14b are arranged to be opposed to each other via the frame body section 13.

The pair of shaft sections 14a and 14b are arranged along the X axis in plan view and formed in a longitudinal shape (a bar shape) extending along the X axis. One ends of the shaft sections 14a and 14b are connected to the frame body section 13. The other ends of the shaft sections 14a and 14b are connected to the fixed section 15. The shaft sections 14a and 14b are arranged such that the center axes thereof coincide with the X axis.

In this way, the shaft sections 14a and 14b support the frame body section 13 from both sides. The shaft sections 14a and 14b are torsionally deformed according to the swinging around the X axis of the frame body section 13.

The shape of the shaft sections 14a and 14b is not limited to the shape explained above as long as the shaft sections 14a and 14b support the frame body section 13 swingably around the X axis with respect to the fixed section 15. For example, the shaft sections 14a and 14b may include, in at least one halfway place, a bent or curved portion, a divided portion, or a portion having different width.

In this way, the movable mirror section 11 is configured swingable around the Y axis and the frame body section 13 is configured swingable around the X axis. Consequently, it is possible to swing (pivot) the movable mirror section 11 (in other words, the light reflection plate 113) around two axes, i.e., the X axis and the Y axis orthogonal to each other.

The base section 111, the shaft sections 12a and 12b, the frame body section 13, the shaft sections 14a and 14b, and the fixed section 15 explained above are integrally formed.

In this embodiment, the base section 111, the shaft sections 12a and 12b, the frame body section 13, the shaft sections 14a and 14b, and the fixed section 15 are formed by etching an SOI substrate in which a first Si layer (a device layer), a $SiO_2$ layer (a box layer), and a second Si layer (a handle layer) are laminated in this order. Consequently, it is possible to improve a vibration characteristic of the first vibration system and the second vibration system. Fine machining of the SOI substrate is possible by etching. Therefore, by forming the base section 111, the shaft sections 12a and 12b, the frame body section 13, the shaft sections 14a and 14b, and the fixed section 15 using the SOI substrate, it is possible to improve dimension accuracies of these sections and attain a reduction in the size of the optical scanner 1.

The base section 111, the shaft sections 12a and 12b, and the shaft sections 14a and 14b are formed by the first Si layer of the SOI substrate. Consequently, it is possible to improve elasticity of the shaft sections 12a and 12b and the shaft sections 14a and 14b. It is possible to suppress the base section 111 from coming into contact with the frame body section 13 when the base section 111 pivots around the Y axis.

The first Si layer of the SOI substrate is a p-type silicon monocrystal substrate or an n-type silicon monocrystal substrate. For example, when the first Si layer is a p-type silicon monocrystal substrate of a (100) plane, the shaft sections 14a and 14b extend along a <110> direction of a crystal axis of the p-type silicon single crystal substrate of the (100) plane. When the first Si layer is an n-type silicon monocrystal substrate of the (100) plane, the shaft sections 14a and 14b extend along the <110> direction of a crystal axis of the n-type silicon monocrystal substrate of the (100) plane.

The frame body section 13 and the fixed section 15 are formed by a laminated body including the first Si layer, the $SiO_2$ layer, and the second Si layer of the SOI substrate. Consequently, it is possible to improve the rigidity of the frame body section 13 and the fixed section 15.

A portion projecting further in the thickness direction than the $SiO_2$ layer and the second Si layer of the frame body section 13, that is, the shaft sections 12a and 12b or the shaft sections 14a and 14b of the frame body section 13 forms the rib 131 for improving the rigidity of the frame body section 13.

Reflection prevention treatment is preferably applied to the upper surface of a portion (in this embodiment, the fixed section 15) located on the outer side of the light reflection plate 113 in plan view. Consequently, it is possible to suppress unnecessary light irradiated on sections other than the light reflection plate 113 from changing to stray light.

Such reflection prevention processing is not particularly limited. Examples of the reflection prevention processing include formation of a reflection preventing film (a dielectric multilayer film), roughening treatment, and blackening treatment.

The materials and the forming methods of the base section 111, the shaft sections 12a and 12b, the frame body section 13, the shaft sections 14a and 14b, and the fixed section 15 are examples. The invention is not limited to the materials and the forming methods. For example, the base section 111, the shaft sections 12a and 12b, the frame body section 13, the shaft sections 14a and 14b, and the fixed section 15 may be formed by etching a silicon substrate.

In this embodiment, the spacer 112 and the light reflection plate 113 are also formed by etching the SOI substrate. The spacer 112 is formed by a laminated body including the $SiO_2$ layer and the second Si layer of the SOI substrate. The light reflection plate 113 is formed by the first Si layer of the SOI substrate.

By forming the spacer 112 and the light reflection plate 113 using the SOI substrate in this way, it is possible to easily and highly accurately manufacture the spacer 112 and the light reflection plate 113 joined to each other.

The spacer 112 is joined to the base section 111 by a joining material (not shown in the figure) such as an adhesive or a brazing material.

The fixed section 15 is not limited to the fixed section explained above as long as the fixed section 15 supports the frame body section 13. For example, the fixed section 15 and the shaft sections 14a and 14b may be separate bodies.

The permanent magnet 21 is joined to the lower surface (a surface on the opposite side of the light reflection plate 113) of the frame body section 13, that is, the distal end face of the rib 131.

A joining method for the permanent magnet 21 and the frame body section 13 is not specifically limited. For example, a joining method using an adhesive can be used.

The permanent magnet 21 is magnetized in a direction inclining with respect to the X axis and the Y axis.

In this embodiment, the permanent magnet 21 is formed in a longitudinal shape (a bar shape) extending in the direction inclining with respect to the X axis and the Y axis. The permanent magnet 21 is magnetized in the longitudinal direction. That is, the permanent magnet 21 is magnetized to set one end as an S pole and set the other end as an N pole.

The permanent magnet 21 is provided to be symmetrical centering on an intersection of the X axis and the Y axis in plan view.

In an example explained in this embodiment, one permanent magnet is set in the frame body section 13. However, the number of permanent magnets is not limited to this. For example, two permanent magnets may be set in the frame body section 13. In this case, for example, two permanent magnets formed in a long shape only has to be set in the frame body section 13 to be opposed to each other via the base section 111 in plan view and parallel to each other.

An inclination angle θ in the direction of magnetization (the extending direction) of the permanent magnet 21 with respect to the X axis is not particularly limited. However, the inclination angle θ is preferably equal to or larger than 30° and equal to or smaller than 60°, more preferably equal to or larger than 30° and equal to or smaller than 45°, and still more preferably 45°. By providing the permanent magnet 21 in this way, it is possible to smoothly and surely pivot the movable mirror section 11 around the X axis.

On the other hand, when the inclination angle θ is smaller than the lower limit value, depending on conditions such as the intensity of a voltage applied to the coil 31 by the voltage applying section 4, the movable mirror section 11 cannot be sufficiently pivoted around the X axis. On the other hand, when the inclination angle θ exceeds the upper limit value, depending on the conditions, the movable mirror section 11 cannot be sufficiently pivoted around the Y axis.

As the permanent magnet 21, for example, a neodymium magnet, a ferrite magnet, a samarium cobalt magnet, an alnico magnet, or a bond magnet can be suitably used. The permanent magnet 21 is formed by magnetizing a hard magnetic body. For example, the permanent magnet 21 is formed by setting a pre-magnetization hard magnetic body in the frame body section 13 and then magnetizing the hard magnetic body. This is because, if it is attempted to set the already-magnetized permanent magnet 21 in the frame body section 13, the permanent magnet 21 sometimes cannot be set in a desired position because of the influence of an external magnetic field and magnetic fields of other components.

The coil 31 is provided right under the permanent magnet 21. That is, the coil 31 is provided to be opposed to the lower surface of the frame body section 13. Consequently, it is possible to efficiently cause a magnetic field generated from the coil 31 to act on the permanent magnet 21. Consequently, it is possible to attain power saving and a reduction in the size of the optical scanner 1.

In this embodiment, the coil 31 is wound around the magnetic core 32. Consequently, it is possible to efficiently cause the magnetic field generated by the coil 31 to act on the permanent magnet 21. The magnetic core 32 may be omitted.

The coil 31 is electrically connected to the voltage applying section 4.

When a voltage is applied to the coil 31 by the voltage applying section 4, a magnetic field in a direction orthogonal to the X axis and the Y axis is generated from the coil 31.

The voltage applying section 4 includes, as shown in Fig. 4, a first voltage generating section 41 configured to generate a first voltage $V_1$ for pivoting the movable mirror section 11 around the Y axis, a second voltage generating section 42 configured to generate a second voltage $V_2$ for pivoting the movable mirror 11 around the X axis, and a voltage superimposing section 43 configured to superimpose the first voltage $V_1$ and the second voltage $V_2$. The voltage applying section 4 applies a voltage superimposed by the voltage superimposing section 43 to the coil 31.

As shown in Fig. 5A, the first voltage generating section 41 generates the first voltage $V_1$ (a voltage for horizontal scanning) that cyclically changes at a cycle $T_1$. That is, the first voltage generating section 41 generates the first voltage $V_1$ having a first frequency ($1/T_1$).

The first voltage $V_1$ is formed in a waveform like a sine wave. Therefore, the optical scanner 1 can effectively main-scan light. The waveform of the first voltage $V_1$ is not limited to this.

The first frequency ($1/T_1$) is not particularly limited as long as the first frequency is a frequency suitable for horizontal scanning. However, the first frequency is preferably 10 to 40 kHz.

In this embodiment, the first frequency is set to be equal to a torsional resonance frequency (f1) of the first vibration system (a torsional vibration system) configured by the movable mirror section 11 and the pair of shaft sections 12a and 12b. That is, the first vibration system is designed (manufactured) such that the torsional resonance frequency f1 thereof is a frequency suitable for the horizontal scanning. Consequently, it is possible to increase a pivoting angle around the Y axis of the movable mirror section 11.

On the other hand, as shown in Fig. 5B, the second voltage generating section 42 generates the second voltage $V_2$ (a voltage for vertical scanning) that cyclically changes at a cycle $T_2$ different from the cycle $T_1$). That is, the second voltage generating section 42 generates the second voltage $V_2$ having a second frequency ($1/T_2$).

The second voltage $V_2$ is formed in a waveform like a saw-tooth wave. Therefore, the optical scanner 1 can effectively vertically scan (sub-scan) light. The waveform of the second voltage $V_2$ is not limited to this.

Unlike the first frequency ($1/T_1$), the second frequency ($1/T_2$) is not particularly limited as long as the second frequency is a frequency suitable for vertical scanning. However, the second frequency is preferably 30 to 120 Hz (about 60 Hz). In this way, the frequency of the second voltage $V_2$ is set to about 60 Hz and the frequency of the first voltage $V_1$ is set to 10 to 40 kHz as explained above. Consequently, it is possible to pivot the movable mirror section 11 around each of the two axes (the X axis and the Y axis) orthogonal to each other at a frequency suitable for rendering on a display. However, if the movable mirror section 11 can be pivoted around each of the X axis and the Y axis, a combination of the frequency of the first voltage $V_1$ and the frequency of the second voltage $V_2$ is not particularly limited.

In this embodiment, the frequency of the second voltage $V_2$ is adjusted to be a frequency different from a torsional resonance frequency (a resonance frequency) of the second vibration system (torsional vibration system) configured by the movable mirror section 11, the pair of shaft sections 12a and 12b, the frame body section 13, the pair of shaft sections 14a and 14b, and the permanent magnet 21.

The frequency (the second frequency) of the second voltage $V_2$ is preferably lower than the frequency (the first frequency) of the first voltage $V_1$. That is, the cycle $T_2$ is preferably longer than the cycle $T_1$. Consequently, it is possible to more surely and more smoothly cause the movable mirror section 11 to pivot around the X axis at the second frequency while causing the movable mirror section 11 to pivot around the Y axis at the first frequency.

When the torsional resonance frequency of the first vibration system is represented as f1 [Hz] and the torsional resonance frequency of the second vibration system is represented as f2 [Hz], f1 and f2 preferably satisfy a relation f2<f1 and more preferably satisfy a relation f1>10f2. Consequently, it is possible to more smoothly cause the movable mirror section 11 to pivot around the X axis at the frequency of the second voltage $V_2$ while causing the movable mirror section 11 to pivot around the Y axis at the frequency of the first voltage $V_1$. On the other hand, when f1 and f2 are set in a relation f1≤f2, it is likely that vibration of the first vibration system due to the second frequency occurs.

The first voltage generating section 41 and the second voltage generating section 42 are connected to the control section 6 and driven on the basis of a signal from the control section 6. The voltage superimposing section 43 is connected to the first voltage generating section 41 and the second voltage generating section 42.

The voltage superimposing section 43 includes an adder 43a for applying a voltage to the coil 31. The adder 43a receives the first voltage $V_1$ from the first voltage generating section 41, receives the second voltage $V_2$ from the second voltage generating section 42, superimposes the voltages, and applies the superimpose voltage to the coil 31.

A driving method for the optical scanner 1 is explained. In this embodiment, as explained above, the frequency of the first voltage $V_1$ is set equal to the torsional resonance frequency of the first vibration system. The frequency of the second voltage $V_2$ is set to a value different from the torsional resonance frequency of the second vibration system and smaller than the frequency of the first voltage $V_1$ (e.g., the frequency of the first voltage $V_1$ is set to 18 kHz and the frequency of the second voltage $V_2$ is set to 60 Hz) .

For example, the first voltage $V_1$ shown in Fig. 5A and the second voltage $V_2$ shown in Fig. 5B are superimposed by the voltage superimposing section 43 and the superimposed voltage is applied to the coil 31.

Then, a magnetic field about to attract one magnetic pole 211 of the permanent magnet 21 to the coil 31 and about to separate the other magnetic pole 212 of the permanent magnet 21 from the coil 31 (this magnetic field is referred to as "magnetic field A1") and a magnetic field about to separate the one magnetic pole 211 of the permanent magnet 21 from the coil 31 and about to attract the other magnet pole 212 of the permanent magnet 21 to the coil 31 (this magnetic field is referred to as "magnetic field A2") are alternately switched by the first voltage $V_1$.

As explained above, in plan view of Fig. 1, the N pole of the permanent magnet 21 is located on one side and the S pole of the permanent magnet 21 is located on the other side across the Y axis. Therefore, when the magnetic field A1 and the magnetic field A2 are alternately switched, vibration having a torsional vibration component around the Y axis is excited in the frame body section 13. According to the vibration, the movable mirror section 11 pivots around the Y axis at the frequency of the first voltage $V_1$ while torsionally deforming the shaft sections 12a and 12b.

The frequency of the first voltage $V_1$ is equal to the torsional resonance frequency of the first vibration system. Therefore, it is possible to efficiently cause the movable mirror section 11 to pivot around the Y axis with the first voltage $V_1$. That is, even if the vibration having the torsional vibration component around the Y axis of the frame body section 13 is small, it is possible to increase a pivoting angle around the Y axis of the movable mirror section 11 involved in the vibration.

On the other hand, a magnetic field about to attract the one magnetic pole 211 of the permanent magnet 21 to the coil 31 and about to separate the other magnetic pole 212 of the permanent magnet 21 from the coil 31 (this magnetic field is referred to as "magnetic field B1") and a magnetic field about to separate the one magnetic pole 211 of the permanent magnet 21 from the coil 31 and about to attract the other magnetic pole 212 of the permanent magnet 21 to the coil 31 (this magnetic field is referred to as "magnetic field B2") are alternately switched by the second voltage $V_2$.

As explained above, in plan view of Fig. 1, the N pole of the permanent magnet 21 is located on one side and the S pole of the permanent magnet 21 is located on the other side across the X axis. Therefore, when the magnetic field B1 and the magnetic field B2 are alternately switched, the frame body section 13 pivots together with the movable mirror section 11 around the X axis at the frequency of the second voltage $V_2$ while torsionally deforming the shaft sections 14a and 14b.

The frequency of the second voltage $V_2$ is set extremely low compared with the frequency of the first voltage $V_1$. The torsional resonance frequency of the second vibration system is set lower than the torsional resonance frequency of the first vibration system. Therefore, it is possible to suppress the movable mirror section 11 from pivoting around the Y axis at the frequency of the second voltage $V_2$.

In this way, by applying the voltage obtained by superimposing the first voltage $V_1$ and the second voltage $V_2$ to the coil 31, it is possible to cause the movable mirror section 11 to pivot around the X axis at the frequency of the second voltage $V_2$ while causing the movable mirror section 11 to pivot around the Y axis at the frequency of the first voltage $V_1$. Consequently, it is possible to attain a reduction in costs and a reduction in the size of the apparatus and cause the movable mirror section 11 to pivot around the X axis and the Y axis with an electromagnetic driving system (a moving magnet system). Since the number of components (permanent magnets and coils) configuring a driving source can be reduced, it is possible to obtain a simple and small configuration. Since the coil 31 is separated from the vibration system of the optical scanner 1, it is possible to suppress an adverse effect due to heat generation of the coil 31 on the vibration system.

The behavior of the movable mirror section 11 is detected on the basis of detection signals of the distortion detecting elements 51 and 52.

The distortion detecting elements 51 and 52 are explained in detail below.

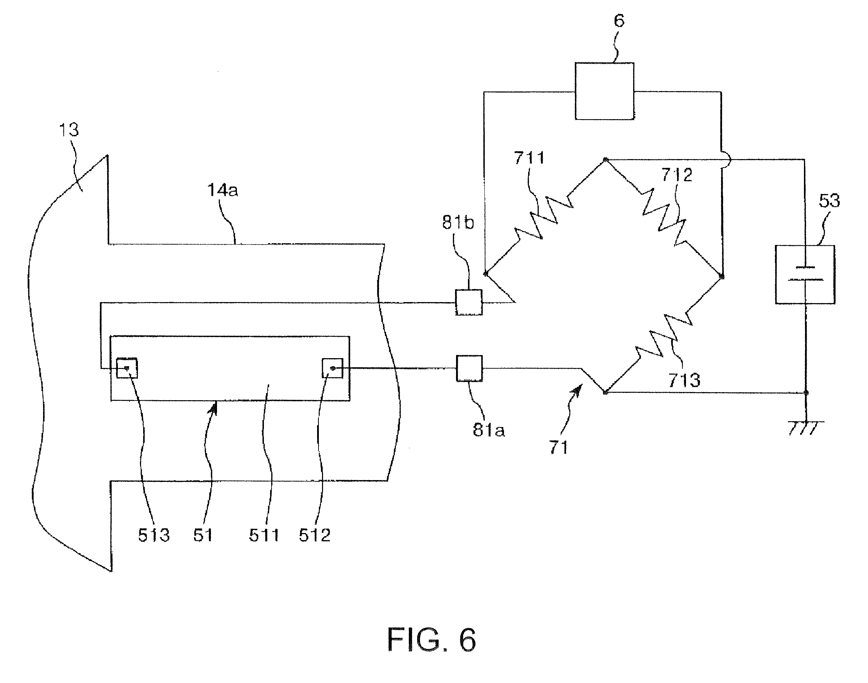

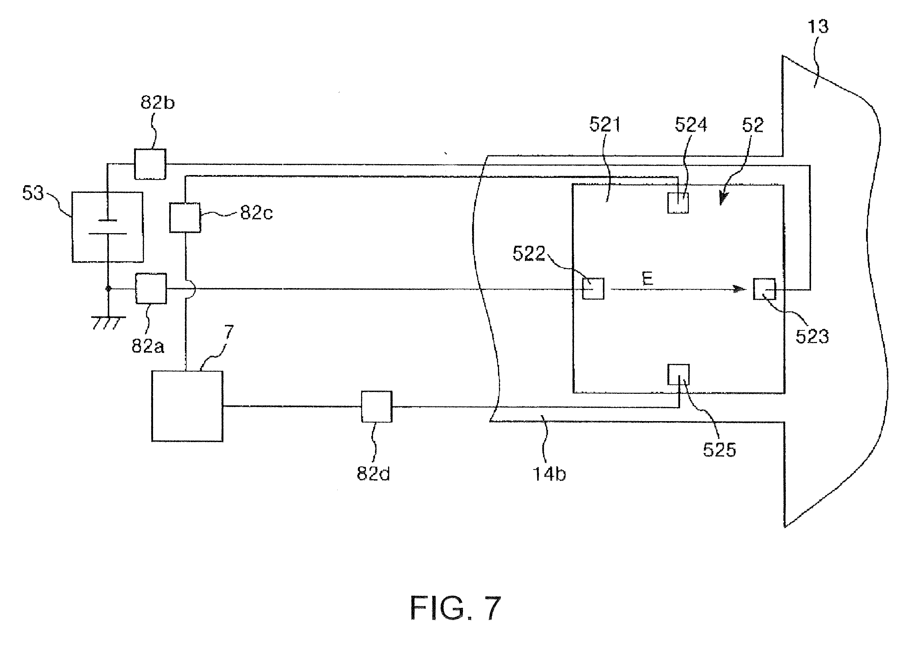

Fig. 6 is a diagram for explaining the first distortion detecting element of the optical scanner shown in Fig. 1. Fig. 7 is a diagram for explaining the second distortion detecting element of the optical scanner shown in Fig. 1.

The distortion detecting element 51 (the first distortion detecting element) is arranged at the end on the frame body section 13 side of the shaft section 14a and detects deformation (mainly bending deformation) of the shaft section 14a. Consequently, it is possible to suppress heat due to light made incident on the movable mirror section 11 from affecting the distortion detecting element 51. It is unnecessary to provide, in the shaft sections 12a and 12b, distortion resistance elements used for detection of the behavior around the Y axis of the movable mirror section 11. Therefore, it is possible to improve a degree of freedom of design of the shaft sections 12a and 12b.

The distortion detecting element 51 is a piezo-resistance element of a two-terminal type.

Specifically, the distortion detecting element 51 includes, as shown in Fig. 6, a piezo-resistance region 511 and a pair of terminals 512 and 513 arranged on the piezo-resistance region 511.

The piezo-resistance region 511 is formed by doping impurities on the surface of the shaft section 14a. More specifically, when the shaft section 14a is formed by machining a p-type silicon monocrystal substrate, the piezo-resistance region 511 is n-type silicon monocrystal (an n-type resistance region) formed by doping impurities such as phosphorus on the surface of the shaft section 14a. On the other hand, when the shaft section 14a is formed by machining an n-type silicon monocrystal substrate, the piezo-resistance region 511 is p-type silicon monocrystal (a p-type resistance region) formed by doping impurities such as boron on the surface of the shaft section 14a.

The piezo-resistance region 511 is formed in a longitudinal shape extending in the direction along the longitudinal direction of the shaft section 14a (i.e., an X-axis direction). The piezo-resistance region 511 is arranged in the center in the width direction of the shaft section 14a in plan view.

In this embodiment, the entire piezo-resistance region 511 is provided on the shaft section 14a. However, the piezo-resistance region 511 is not limited to the position shown in the figure as long as the piezo-resistance region 511 can receive tensile stress or compression stress due to bending deformation of the shaft section 14a. For example, the piezo-resistance region 511 may be provided across a boundary between the shaft section 14a and the fixed section 15.

On the piezo-resistance region 511, the pair of terminals 512 and 513 is arranged side by side in the direction along the longitudinal direction of the shaft section 14a (i.e., the X-axis direction).

In this embodiment, the pair of terminals 512 and 513 is arranged at both ends in the longitudinal direction of the piezo-resistance region 511.

The pair of terminals 512 and 513 is electrically connected to the first signal processing circuit 71.

In the distortion detecting element 51, when tensile stress or compression stress occurs in the piezo-resistance region 511 according to bending deformation of the shaft section 14a, a specific resistance value of the piezo-resistance region 511 changes according to a degree of the tensile stress or the compression stress.

In this embodiment, the piezo-resistance region 511 is formed in the longitudinal shape extending in the X-axis direction and the pair of terminals 512 and 513 is arranged side by side in the X-axis direction on the piezo-resistance region 511. Therefore, it is possible to increase a signal based on the bending deformation of the shaft section 14a included in a signal output from the distortion detecting element 51.

The piezo-resistance region 511 and the pair of terminals 512 and 513 are arranged to be symmetrical with respect to the X axis in plan view. Therefore, the distortion detecting element 51 can detect only tensile stress or compression stress involved in the bending deformation of the shaft section 14a. That is, the distortion detecting element 51 can be adapted not to detect shearing involved in torsional deformation of the shaft section 14a. Therefore, it is possible to suppress or prevent a signal based on the torsional deformation of the shaft section 14a from being included in a signal output from the distortion detecting element 51. As a result, it is possible to highly accurately detect, using the signal output from the distortion detecting element 51, with a relatively simple configuration, the behavior around the Y axis of the movable mirror section 11.

A detection signal of the distortion detecting element 51 is input to the first signal processing circuit 71 (a first signal processing section) via a pair of terminals 81a and 81b provided in the fixed section 15.

The first signal processing circuit 71 has a function of converting the detection signal of the distortion detecting element 51 into a signal suitable for signal processing according to predetermined processing.

Examples of specific processing in the first signal processing circuit 71 includes impedance conversion, temperature compensation, signal amplification, a filter, and an AD converter.

As explained above, the detection signal of the distortion detecting element 51 includes a signal based on bending deformation of the shaft section 14a. The first signal processing circuit 71 performs the processing explained above according to necessity and outputs the signal based on the bending deformation of the shaft section 14a. Consequently, it is possible to detect the behavior around the Y axis of the movable mirror section 11 on the basis of the signal output from the first signal processing circuit 71.

In this embodiment, the first signal processing circuit 71 includes, as shown in Fig. 6, resistance elements 711, 712, and 713.

The resistance elements 711, 712, and 713 and the distortion detecting element 51 configure a bridge circuit (a Wheatstone bridge circuit). The bridge circuit receives electric power supplied by a distortion detecting element driving circuit 53 and outputs a signal (a voltage) corresponding to a change in a resistance value of the distortion detecting element 51 to the control section 6.

Each of the resistance elements 711, 712, and 713 preferably has a temperature characteristic equivalent to the temperature characteristic of the distortion detecting element 51. Consequently, it is possible to stably output a signal (a voltage) corresponding to a bending deformation amount of the shaft section 14a irrespective of the temperature characteristic of the distortion detecting element 51.

The resistance elements 711, 712, and 713 may be arranged in the fixed section 15 in positions where the resistance elements 711, 712, and 713 do not receive stress involved in deformation of the shaft sections 14a and 14b. In this case, each of the resistance elements 711, 712, and 713 can be configured by a resistance region, which is configured the same as the piezo-resistance region of the distortion detecting element 51, and a pair of terminals provided in the resistance region. In this case, each of the resistance elements 711, 712, and 713 is preferably arranged in a position where a temperature condition is equivalent to the temperature condition of the distortion detecting element 51.

The signal output from the first signal processing circuit 71 is input to the control section 6 shown in Fig. 3.

On the other hand, the distortion detecting element 52 is arranged at the end on the frame body section 13 side of the shaft section 14b and detects deformation (mainly torsional deformation) of the shaft section 14b. Consequently, it is possible to suppress heat due to light made incident on the movable mirror section 11 from affecting the distortion detecting element 52. It is unnecessary to provide, in the shaft sections 12a and 12b, distortion resistance elements used for detection of the behavior around the X axis of the movable mirror section 11. Therefore, it is possible to improve a degree of freedom of design of the shaft sections 12a and 12b.

The distortion detecting element 52 is a piezo-resistance element of a four-terminal type.

Specifically, the distortion detecting element 52 includes, as shown in Fig. 7, a piezo-resistance region 521 and a pair of input terminals 522 and 523 and a pair of output terminals 524 and 525 arranged on the piezo-resistance region 521.

The piezo resistance region 521 is formed by doping impurities on the surface of the shaft section 14b. More specifically, when the shaft section 14b is formed by machining a p-type silicon monocrystal substrate, the piezo-resistance region 521 is n-type silicon monocrystal (an n-type resistance region) formed by doping impurities such as phosphorous on the surface of the shaft section 14b. On the other hand, when the shaft section 14b is formed by machining an n-type silicon monocrystal substrate, the piezo-resistance region 521 is p-type silicon monocrystal (a p-type resistance region) formed by doping impurities such as boron on the surface of the shaft section 14b.

In this embodiment, the piezo-resistance region 521 is formed in a square shape having a pair of sides extending along the X-axis direction and a pair of sides extending along the Y-axis direction in plan view.

In this embodiment, the entire piezo-resistance region 521 is provided on the shaft section 14b. However, the piezo-resistance region 521 is not limited to the position shown in the figure as long as the piezo-resistance region 521 can receive shearing stress due to torsional deformation of the shaft section 14b. For example, the piezo-resistance region 521 may be provided across a boundary between the shaft section 14b and the fixed section 15.

On the piezo-resistance region 521, the pair of input terminals 522 and 523 is arranged side by side in the direction along the longitudinal direction of the shaft section 14b (i.e., the X-axis direction). The pair of output terminals 524 and 525 is arranged side by side in the direction along the direction perpendicular to the longitudinal direction of the shaft section 14b (i.e., the Y-axis direction).

In this embodiment, the pair of input terminals 522 and 523 is arranged at both ends in the X-axis direction of the piezo-resistance region 521. The pair of output terminals 524 and 525 is arranged at both ends in the Y-axis direction of the piezo-resistance region 521.

The pair of input terminals 522 and 523 is electrically connected to the distortion detecting element driving circuit 53 via a pair of terminals 82a and 82b provided in the fixed section 15.

On the other hand, the pair of output terminals 524 and 525 is electrically connected to the second signal processing circuit 72 via a pair of terminals 82c and 82d provided in the fixed section 15.

In the distortion detecting element 52, the distortion detecting element driving circuit 53 applies a voltage between the pair of input terminals 522 and 523 at a constant voltage or a constant current. Consequently, an electric field E is generated on the piezo-resistance region 521. Under the electric field E, when shearing stress occurs in the piezo-resistance region 521 according to torsional deformation of the shaft section 14b, according to a degree of the shearing stress, a specific resistance value of the piezo-resistance region 521 changes and a potential difference between the pair of output terminals 524 and 525 changes. The potential difference changes according to a torsional deformation amount of the shaft section 14b and a swinging angle around the X axis of the movable mirror section 11 and the frame body section 13. Therefore, it is possible to detect the behavior around the X axis of the movable mirror section 11 on the basis of the potential difference.

The distortion detecting element 52 can detect only shearing stress involved in the torsional deformation of the shaft section 14b. That is, the distortion detecting element 52 can be adapted not to detect tensile or compression stress involved in bending deformation of the shaft section 14b. Therefore, it is possible to suppress or prevent a signal based on the bending deformation of the shaft section 14b from being included in a signal output from the distortion detecting element 52. As a result, it is possible to highly accurately detect, using the signal output from the distortion detecting element 52, with a relatively simple configuration, the behavior around the X axis of the movable mirror section 11.

A detection signal of the distortion detecting element 52 is input to the second signal processing circuit 72 (a second signal processing section).

The second signal processing circuit 72 has a function of converting the detection signal of the distortion detecting element 52 into a signal suitable for signal processing according to predetermined processing.

Examples of specific processing in the second signal processing circuit 72 includes impedance conversion, temperature compensation, signal amplification, a filter, and an AD converter.

As explained above, the detection signal of the distortion detecting element 52 includes a signal based on torsional deformation of the shaft section 14b. The second signal processing circuit 72 performs the processing explained above according to necessity and outputs the signal based on the torsional deformation of the shaft section 14b. Consequently, it is possible to detect the behavior around the X axis of the movable mirror section 11 on the basis of the signal output from the second signal processing circuit 72.

The signal output from the second signal processing circuit 72 is input to the control section 6 shown in Fig. 3.

The control section 6 detects the behavior around the Y axis of the movable mirror section 11 on the basis of the signal output from the first signal processing circuit 71. Consequently, it is possible to control, on the basis of the detected behavior, the behavior around the Y axis of the movable mirror section 11 to be a desired state and synchronize the behavior around the Y axis of the movable mirror section 11 and the operations of other devices.

The control section 6 detects the behavior around the X axis of the movable mirror section 11 on the basis of the signal output from the second signal processing circuit 72. Consequently, it is possible to control, on the basis of the detected behavior, the behavior around the X axis of the movable mirror section 11 to be a desired state and synchronize the behavior around the X axis of the movable mirror section 11 and the operations of other devices.

In this embodiment, the control section 6 includes, as shown in Fig. 3, an H detecting section 61, a V detecting section 62, an H control section 63, a V control section 64, an H target-value storing section 65, and a V-target-value generating section 66.

The H detecting section 61 generates, on the basis of a signal output from the first signal processing circuit 71, for example, a signal corresponding to a swinging angle around the Y axis of the movable mirror section 11 as a signal necessary for control of horizontal scanning. A detection method for the swinging angle around the Y axis of the movable mirror section 11 is explained in detail below.

The V detecting section 62 generates, on the basis of a signal output from the second signal processing circuit 72, for example, a signal corresponding to a swinging angle around the X axis of the movable mirror section 11 as a signal necessary for control of vertical scanning.

The H control section 63 generates a driving signal for horizontal scanning on the basis of an H target value stored in advance in the H target-value storing section 65 and a signal output from the H detecting section 61.

In the H target-value storing section 65, as the H target value, for example, a phase difference from the driving signal for horizontal scanning and a maximum swinging angle around the Y axis of the movable mirror section 11 are stored.

The V control section 64 generates a driving signal for vertical scanning on the basis of a V target value output from the V-target-value generating section 66 and a signal output from the V detecting section 62.

The V-target-value generating section 66 generates, as the V target value, for example, a swinging angle around the X axis of the movable mirror section 11 on the basis of line information in a vertical scanning direction input from the outside.

A method of detecting the behavior around the Y axis of the movable mirror section 11 using a detection signal of the distortion detecting element 51 is explained in an example in which a swinging angle around the Y axis of the movable mirror section 11 is detected.

First detecting method

In a first detecting method, the behavior (in this example, a swinging angle) around the Y axis of the movable mirror section 11 is estimated on the basis of a signal output from the first signal processing circuit 71 using an observer.

The first detecting method is explained in detail below.

As explained above, the optical scanner 1 superimposes a first voltage for horizontal scanning and a second voltage for vertical scanning and applies the superimposed voltage to the coil 31 to thereby swing the movable mirror section 11 around the Y axis (the first axis) at the frequency of the first voltage and swing the movable mirror section 11 around the X axis (the second axis) at the frequency of the second voltage.

The frequency of the first voltage (a driving frequency for the horizontal scanning) and the frequency of the second voltage (a driving frequency for the vertical scanning) are sufficiently apart from each other. Therefore, crosstalk of torque generated by the first voltage and torque generated by the second voltage does not have to be taken into account. Therefore, motion around the X axis and motion around the Y axis in the optical scanner 1 can be independently examined.

Then, an equation of motion concerning the motion around the Y axis of the optical scanner 1 can be represented by the following Expression (1).

$$\begin{cases} I_{hh}\ddot{\theta}_{hh} + c_{hh}\left(\dot{\theta}_{hh} - \dot{\theta}_{vh}\right) + k_{hh}\left(\theta_{hh} - \theta_{vh}\right) = 0 \\ I_{vh}\ddot{\theta}_{vh} + c_{vh}\dot{\theta}_{vh} - c_{hh}\left(\dot{\theta}_{hh} - \dot{\theta}_{vh}\right) + k_{vh}\theta_{vh} - k_{hh}\left(\theta_{hh} - \theta_{vh}\right) = T(t) \end{cases} \quad (1)$$

In Expression (1), $\theta_{hh}$ represents a swinging angle around the Y axis of the movable mirror section 11, $\theta_{vh}$ represents a swinging angle around the Y axis of the frame body section 13, $I_{hh}$ represents inertia around the Y axis of the movable mirror section 11, $I_{vh}$ represents inertia around the Y axis of the frame body section 13, $C_{hh}$ represents an attenuation coefficient of swinging (vibration) around the Y axis of the movable mirror section 11, $C_{vh}$ represents an attenuation coefficient of swinging (vibration) around the Y axis of the frame body section 13, $k_{hh}$ represents a torsional spring constant around the Y axis of the shaft sections 12a and 12b, $k_{vh}$ represents a torsional spring constant around the Y axis of the shaft sections 14a and 14b, T (t) represents torque around the Y axis received by the frame body section 13 according to mutual action of magnetic fields of the permanent magnet 21 and the coil 31.

When X is represented as follows:

$$X = \begin{bmatrix} \theta_{hh} \\ \theta_{vh} \\ \dot{\theta}_{hh} \\ \dot{\theta}_{vh} \end{bmatrix}$$

, an output of a detection signal concerning bending stress of the shaft section 14a is represented as y, and a conversion coefficient of the distortion detecting element 51 is represented as $\alpha$, from Expression (1), a relation between X and y indicated below can be derived.

$$\dot{X} = AX + BU$$

$$y = CX$$

$$A = \begin{bmatrix} 0 & 0 & 1 & 0 \\ 0 & 0 & 0 & 1 \\ \dfrac{-k_{hh}}{I_{hh}} & \dfrac{k_{vh}}{I_{hh}} & \dfrac{-c_{hh}}{I_{hh}} & \dfrac{c_{vh}}{I_{hh}} \\ \dfrac{k_{hh}}{I_{vh}} & \dfrac{-k_{vh}}{I_{vh}} & \dfrac{c_{hh}}{I_{vh}} & \dfrac{-c_{vh}}{I_{vh}} \end{bmatrix}, B = \begin{bmatrix} 0 \\ 0 \\ 0 \\ \dfrac{1}{I_{vh}} \end{bmatrix}, C = \begin{bmatrix} 0 & \alpha & 0 & 0 \end{bmatrix}$$

When an observability coefficient of a system given by the relation between X and y is represented as follows:

$$M_{obs} = \begin{bmatrix} C_1 \\ C_1 A_1 \\ C_1 A_1^1 \\ C_1 A_1^3 \end{bmatrix}$$

, the following expression is obtained.

$$M_{obs} = \begin{bmatrix} 0 & 1 & 0 & 0 \\ 0 & 0 & 0 & 1 \\ \dfrac{k_{11}}{I_{21}} & -\dfrac{k_{21}}{I_{21}} & \dfrac{c_{21}}{I_{21}} & -\dfrac{c_{21}}{I_{21}} \\ \dfrac{c_{11}k_{11}}{I_{11}I_{21}} - \dfrac{c_{21}k_{11}}{I_{21}^2} & \dfrac{c_{11}k_{21}}{I_{11}I_{21}} + \dfrac{c_{21}k_{21}}{I_{21}^2} & -\dfrac{c_{11}^2}{I_{11}I_{21}} + \dfrac{k_{11}}{I_{21}} - \dfrac{c_{11}c_{21}}{I_{21}^2} & \dfrac{c_{11}c_{21}}{I_{11}I_{21}} - \dfrac{k_{21}}{I_{21}} + \dfrac{c_{21}^2}{I_{21}^2} \end{bmatrix}$$

Since $M_{obs}$=4, this system is observable. Therefore, it is possible to estimate, with an observer, a swinging angle (a deflection angle) around the Y axis of the movable mirror section 11 on the basis of a signal based on bending deformation of the shaft section 14a included in a detection signal of the distortion detecting element 51 arranged in the shaft section 14a.

When an observer gain of the observer is represented as L, a relation between estimated values of X and y is represented as follows.

$$\dot{\hat{X}} = A\hat{X} + BU - L(\hat{y} - y)$$

$$\hat{y} = C\hat{X}$$

(where, $\hat{X}$ =(estimated value of X) and $\hat{y}$ =(estimated value of y)

By using the relation between the estimated values of X and y, it is possible to estimate a swinging angle around the Y axis of the movable mirror section 11 on the basis of the signal based on the bending deformation of the shaft section 14a included in the detection signal of the distortion detecting element 51.

According to the first detecting method explained above, even if the swinging around the Y axis of the movable mirror section 11 is not in a resonant state, it is possible to detect the behavior around the Y axis of the movable mirror section 11 on the basis of the signal output from the first signal processing circuit 71.

Second detecting method

In a second detecting method, the behavior (in this example, a swinging angle) around the Y axis of the movable mirror section 11 is estimated on the basis of a signal output from the first signal processing circuit 71 using a ratio of amplitude in a resonance frequency concerning swinging around the Y axis of the movable mirror section 11 and amplitude in a resonance frequency concerning swinging around the Y axis of the frame body section 13.

The second detecting method is explained in detail below.

In Expression (1), when Laplace transforms of $\theta_{hh}$ and $\theta_{vh}$ are respectively represented as $X_{hh}$ and $X_{vh}$ and all initial values are represented as 0, the following Expression (2) is obtained.

$$\begin{cases} \left(I_{hh}s^2 + c_{hh}s + k_{hh}\right)X_{hh} + \left(-c_{hh}s - k_{hh}\right)X_{vh} = 0 \\ \left(-c_{hh}s - k_{hh}\right)X_{hh} + \left\{I_{vh}s^2 + \left(c_{vh} + c_{hh}\right)s + \left(k_{vh} + k_{hh}\right)\right\}X_{vh} = laplace[T(t)] \end{cases} \quad \cdots (2)$$

When Expression (2) is transformed, the following Expression (3) is obtained.

$$\begin{cases} \begin{bmatrix} X_{hh} \\ X_{vh} \end{bmatrix} = \frac{1}{\left(I_{hh}s^2 + c_{hh}s + k_{hh}\right)*\left\{I_{vh}s^2 + \left(c_{vh} + c_{hh}\right)s + \left(k_{vh} + k_{hh}\right)\right\} - \left(c_{hh}s + k_{hh}\right)^2} \begin{bmatrix} c_{hh}s + k_{hh} \\ I_{hh}s^2 + c_{hh}s + k_{hh} \end{bmatrix} laplace[T(t)] \quad \cdots (3) \end{cases}$$

Resonance frequencies concerning swinging around the Y axis of the movable mirror section 11 and the frame body section 13 are respectively determined by s (=jω; ω: angular frequency) at the time when the denominator of Expression (3) is a minimum. As it is seen from Expression (3), the denominators of $X_{hh}$ and $X_{vh}$ are equal. Therefore, the resonance frequency concerning swinging around the Y axis of the movable mirror section 11 and the resonance frequency concerning swinging around the Y axis of the frame body section 13 coincide with each other.

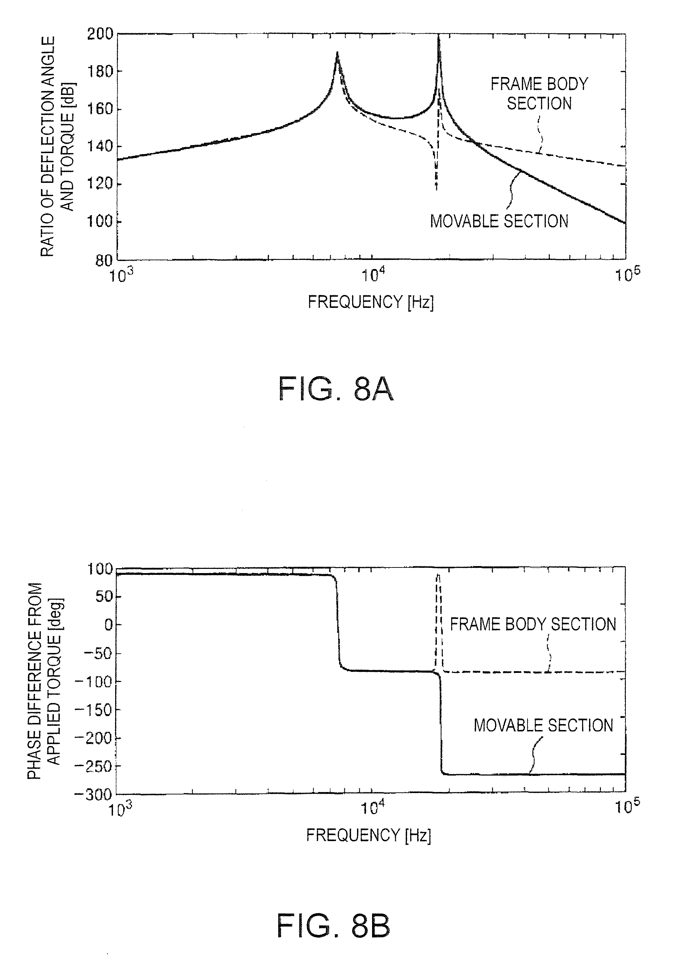

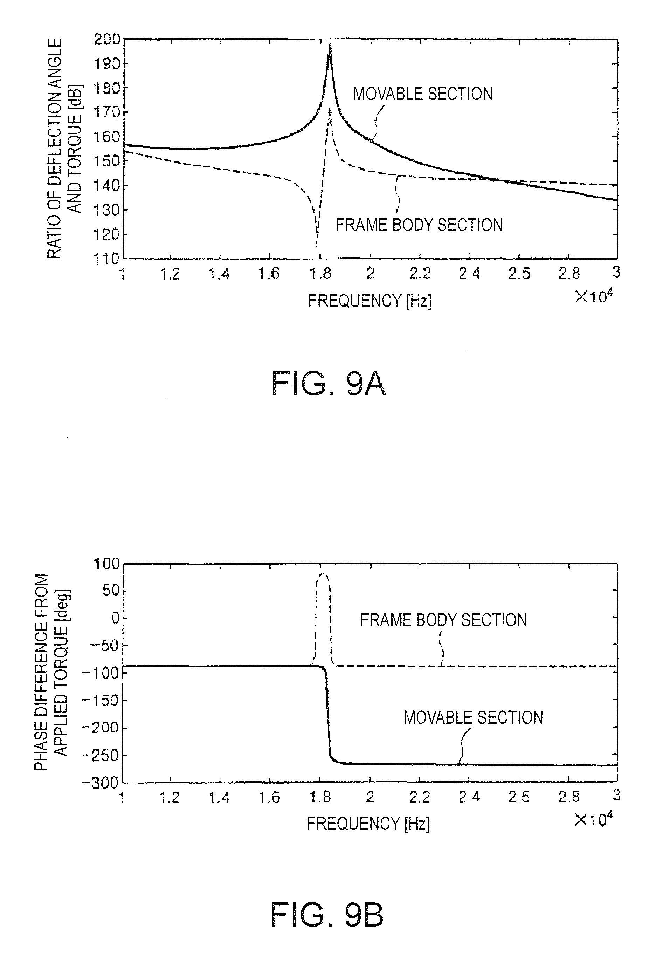

Specifically, a frequency characteristic concerning a ratio of torque around the Y axis applied to the frame body section 13 and swinging angles around the Y axis of the movable mirror section 11 and the frame body section 13 is as shown in Figs. 8A and 9A.

A frequency characteristic concerning a phase difference between the torque around the Y axis applied to the frame body section 13 and the swinging around the Y axis of the movable mirror section 11 and the frame body section 13 is as shown in Figs. 8B and 9B.

Fig. 8A is a graph showing a frequency characteristic concerning a ratio of torque around the first axis applied to the frame body section and a swinging angle around the Y axis of the frame body section. Fig. 8B is a graph showing a frequency characteristic concerning a phase difference between the torque around the first axis applied to the frame body section and the swinging around the first axis of the movable section and the frame body section. Fig. 9A is an enlarged graph of the vicinity of a resonance frequency shown in Fig. 8A. Fig. 9B is an enlarged graph of the vicinity of a resonance frequency shown in Fig. 8B.

The swinging around the Y axis of the movable mirror section 11 and the frame body section 13 appears as tensile stress of the shaft sections 14a and 14b. Therefore, it is possible to grasp, on the basis of a detection signal of the distortion detecting element 51 arranged in the shaft section 14a, whether the movable mirror section 11 is in a resonant state concerning the swinging around the Y axis. More specifically, it is possible to grasp, on the basis of the phase difference between the torque around the Y axis applied to the frame body section 13 and the swinging around the Y axis of the movable mirror section 11 and the frame body section 13, whether the movable mirror section 11 is in the resonant state concerning the swinging around the Y axis.

To estimate a swinging angle (a deflection angle) of the movable mirror section 11 on the basis of a detection signal of the distortion detecting element 51, a response of the distortion detecting element 51 only has to be multiplied with a ratio of the amplitude around the Y axis of the movable mirror section 11 and the amplitude around the Y axis of the frame body section 13 in the resonant state concerning the swinging around the Y axis of the movable mirror section 11.

When the ratio changes according to a temperature change, a temperature sensor is set near the optical scanner 1. The ratio only has to be corrected according to temperature detected by the temperature sensor.

According to the second detecting method explained above, it is possible to highly accurately detect, with a relatively simple configuration, the behavior around the Y axis of the movable mirror section 11 on the basis of the signal output from the first signal processing circuit 71.

With the optical scanner 1 explained above, it is possible to detect the behavior around the Y axis of the movable mirror section 11 on the basis of the signal output from the first signal processing circuit 71. It is possible to detect the behavior around the X axis of the movable mirror section 11 on the basis of the signal output from the second signal processing circuit 72. Further, since the distortion detecting elements 51 and 52 are arranged at the ends on the frame body section 13 sides of the shaft sections 14a and 14b, it is possible to suppress the influence of external heat via the fixed section 15 on the distortion detecting elements 51 and 52.

Second Embodiment

A second embodiment of the invention is explained.

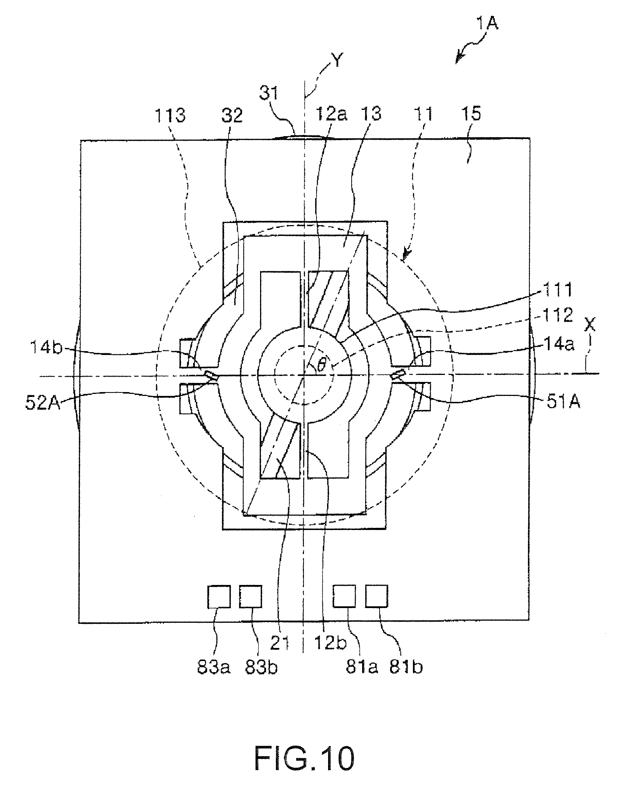

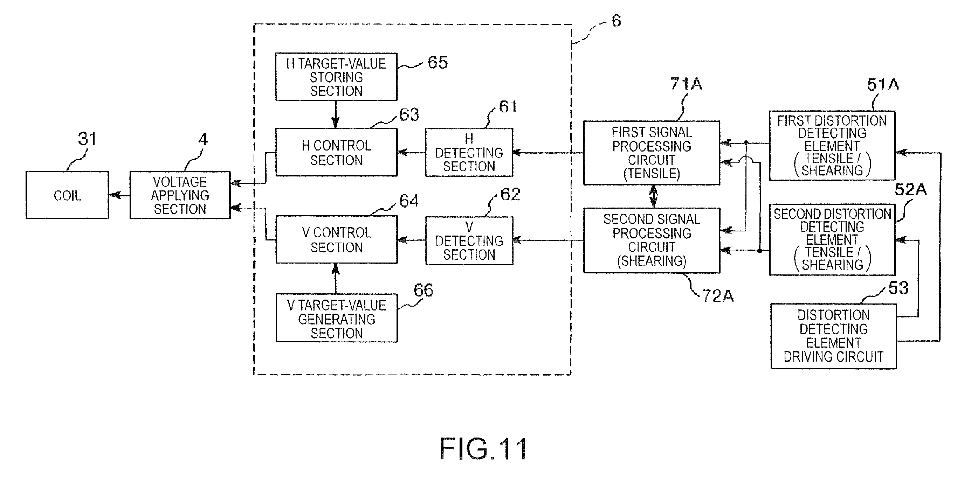

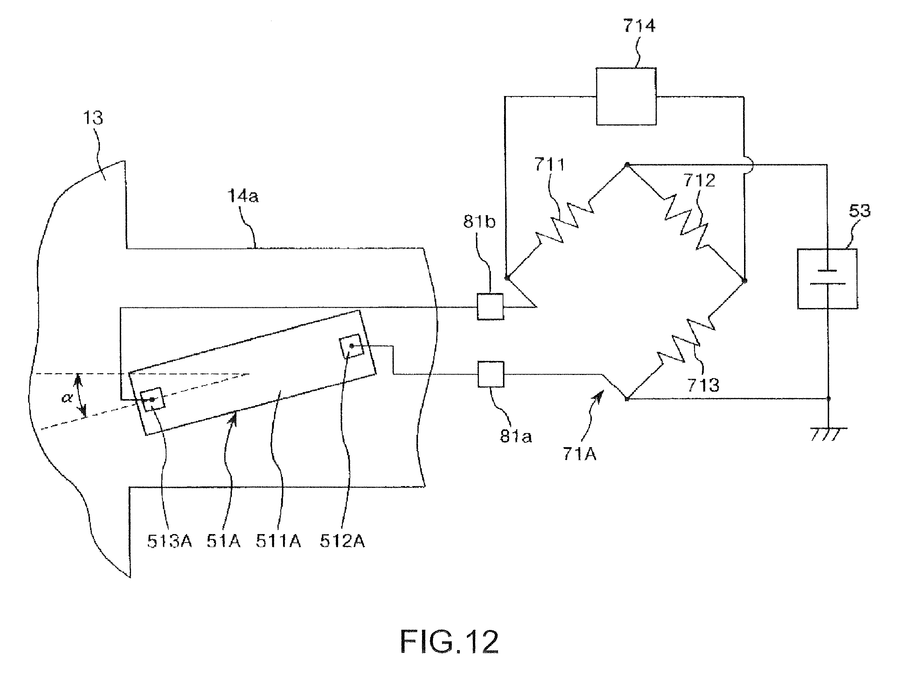

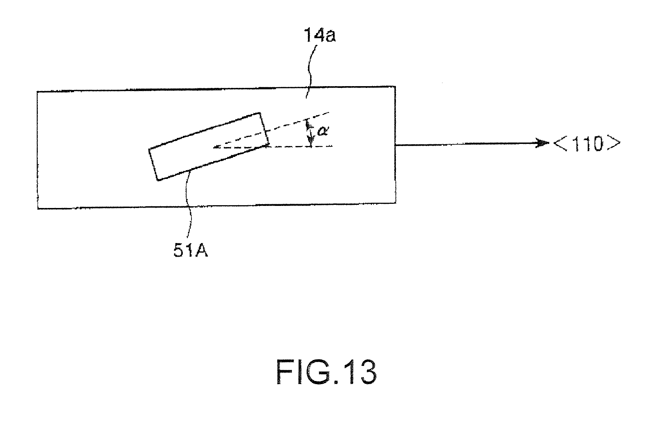

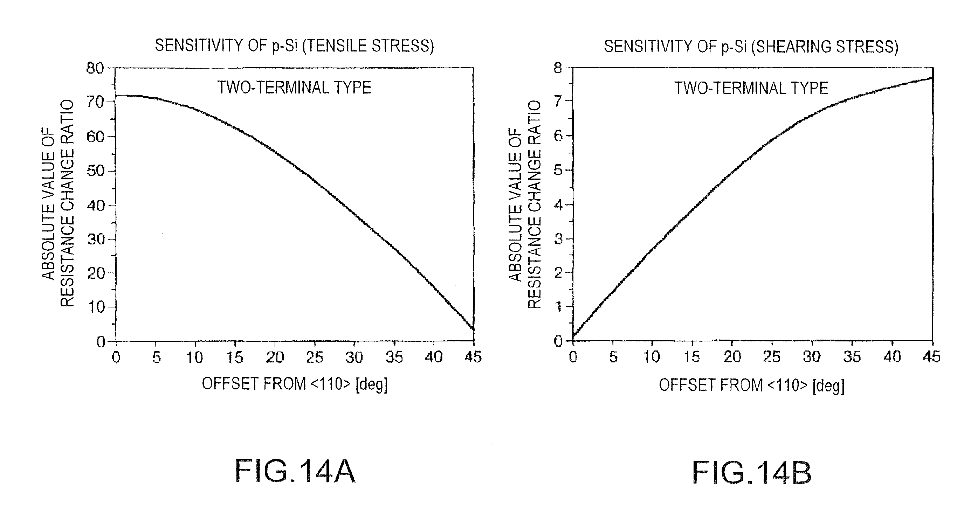

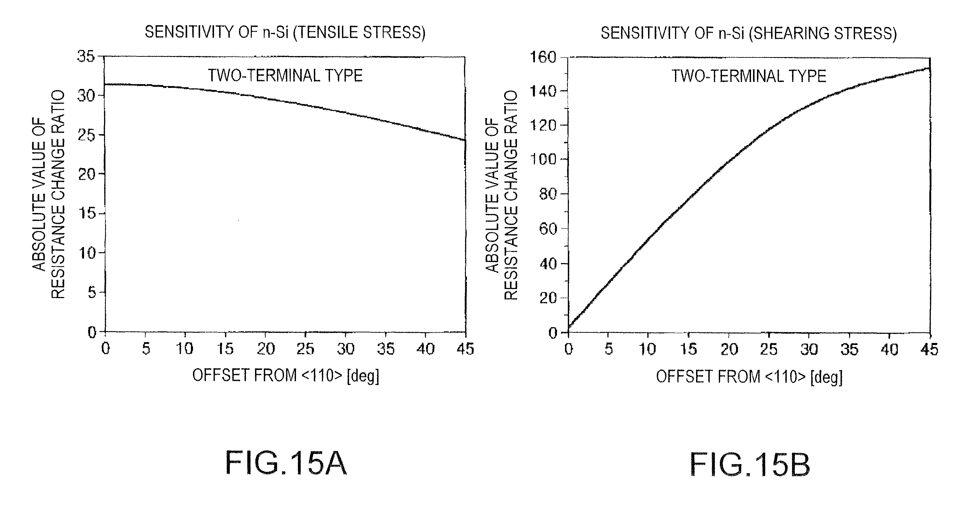

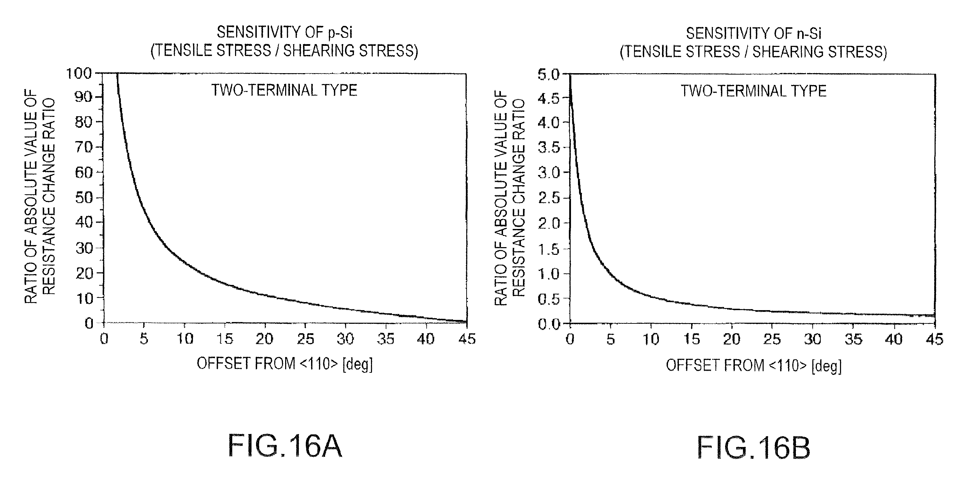

Fig. 10 is a plan view showing an optical scanner according to the second embodiment of the invention. Fig. 11 is a block diagram showing a control system of the optical scanner shown in Fig. 10. Fig. 12 is a diagram for explaining a distortion detecting element of the optical scanner shown in Fig. 10. Fig. 13 is a diagram for explaining a relation between the posture of a distortion detecting element of the two-terminal type and a crystal orientation of silicon. Figs. 14A and 14B are graphs showing a relation between the posture (an angle $\alpha$) of the distortion detecting element of the two-terminal type, in which p-type silicon is used for a piezo-resistance region, and an absolute value of a resistance value change ratio due to tensile stress and shearing stress. Figs. 15A and 15B are graphs showing a relation between the posture (the angle $\alpha$) of the distortion detecting element of the two-terminal type, in which n-type silicon is used for the piezo-resistance region, and an absolute value of a resistance value change ratio due to tensile stress and shearing stress. Figs. 16A and 16B are graphs showing a relation between the posture (the angle $\alpha$) of the distortion detecting element of the two-terminal type and a ratio of an absolute value of a resistance value change ratio due to tensile stress and shearing stress.

The optical scanner according to this embodiment is the same as the optical scanner according to the first embodiment except that the configurations of distortion detecting elements, a first signal processing section, and a second signal processing section are different.

In the following explanation, concerning the second embodiment, differences from the first embodiment are mainly explained. Explanation of the similarities is omitted. In Figs. 10 to 12, components same as the components in the first embodiment are denoted by the same reference numerals and signs.

An optical scanner 1A shown in Fig. 10 includes distortion detecting elements 51A and 52A instead of the distortion detecting elements 51 and 52 in the first embodiment. The optical scanner 1A includes, as shown in Fig. 11, a first signal processing circuit 71A and a second signal processing circuit 72A instead of the first signal processing circuit 71 and the second signal processing circuit 72 in the first embodiment.

The distortion detecting element 51A (the first distortion detecting element) is arranged at the end on the frame body section 13 side of the shaft section 14a and detects deformation (bending deformation and torsional deformation) of the shaft section 14a. On the other hand, the distortion detecting element 52A (the second distortion detecting element) is arranged at the end on the frame body section 13 side of the shaft section 14b and detects deformation (bending deformation and torsional deformation) of the shaft section 14b.

The distortion detecting elements 51A and 52A are arranged to be symmetrical with respect to the Y axis in plan view. In the following explanation, the distortion detecting element 51A is mainly explained. Since the distortion detecting element 52A is the same as the distortion detecting element 51A, explanation of the distortion detecting element 52A is omitted.

The distortion detecting element 51A is a piezo-resistance element of the two-terminal type.

Specifically, the distortion detecting element 51A includes, as shown in Fig. 12, a piezo-resistance region 511A and a pair of terminals 512A and 513A arranged on the piezo-resistance region 511A.

The piezo-resistance region 511A is formed by doping impurities on the surface of the shaft section 14a.

The piezo-resistance region 511A is formed in a longitudinal shape extending in a direction inclining with respect to the longitudinal direction of the shaft section 14a (i.e., the X-axis direction). The piezo-resistance region 511A is arranged across the center in the width direction of the shaft section 14a in plan view.

In this embodiment, the entire piezo-resistance region 511A is provided on the shaft section 14a. However, the piezo-resistance region 511A is not limited to the position shown in the figure as long as the piezo-resistance region 511A can receive tensile stress or compression stress due to bending deformation of the shaft section 14a and receive shearing stress due to torsional deformation of the shaft section 14a. For example, the piezo-electric region 511A may be provided across the boundary between the shaft section 14a and the fixed section 15.

On the piezo-resistance region 511A, a pair of terminals 512A and 513A is arranged side by side in a direction inclining with respect to the longitudinal direction of the shaft section 14a (i.e., the X-axis direction).

In this embodiment, the pair of terminals 512A and 513A is arranged at both ends in the longitudinal direction of the piezo-resistance region 511A.

The pair of terminals 512A and 513A is electrically connected to the first signal processing circuit 71A. Although not shown in Fig. 12, the pair of terminals 512A and 513A is also electrically connected to the second signal processing circuit 72A shown in Fig. 11.

In the distortion detecting element 51A, when tensile stress or compression stress occurs in the piezo-resistance region 511A according to bending deformation of the shaft section 14a, a specific resistance value of the piezo-resistance region 511A changes according to a degree of the tensile stress or the compression stress.

In the distortion detecting element 51A, when shearing stress occurs in the piezo-resistance region 511A according to torsional deformation of the shaft section 14a, a specific resistance value of the piezo-resistance region 511A changes according to a degree of the shearing stress.

Therefore, a detection signal of the distortion detecting element 51A includes a signal based on the bending deformation and the torsional deformation of the shaft section 14a.

In this embodiment, the pair of terminals 512A and 513A is arranged side by side in the direction inclining with respect to the X-axis direction on the piezo-resistance region 511A. Therefore, it is possible to increase signals respectively based on the bending deformation and the torsional deformation of the shaft section 14a included in a signal output from the distortion detecting element 51A.

A ratio of the signal based on the bending deformation of the shaft section 14a and the signal based on the torsional deformation of the shaft section 14a included in the detection signal of the distortion detecting element 51A changes according to an angle $\alpha$ (an inclination angle) of the distortion detecting element 51A. The angle $\alpha$ is an angle formed by the longitudinal direction of the shaft section 14a (i.e., the X-axis direction) and a direction in which the pair of terminals 512A and 513A is arranged (a direction of a straight line connecting the pair of terminals 512 and 513 in a shortest distance).

The detection signal of the distortion detecting element 51A is explained in detail in an example in which the longitudinal direction of the shaft section 14a is set in a <110> direction of a crystal axis of silicon monocrystal.

When the piezo-resistance region 511A is formed of p-type silicon monocrystal, as shown in Fig. 14A, an absolute value of a resistance value change ratio concerning tensile stress of the piezo-resistance region 511A between the pair of terminals 512A and 513A decreases as the angle $\alpha$ (offset from <110>) increases. That is, as the angle $\alpha$ increases, the signal based on the bending deformation of the shaft section 14a included in the detection signal of the distortion detecting element 51A decreases.

On the other hand, in this case, as shown in Fig. 14B, an absolute value of a resistance value change ratio concerning shearing stress of the piezo-resistance region 511A between the pair of terminals 512A and 513A increases as the angle $\alpha$ increases. That is, as the angle $\alpha$ increases, the signal based on the torsional deformation of the shaft section 14a included in the detection signal of the distortion detecting element 51A increases. However, a change due to the angle $\alpha$ of the signal based on the torsional deformation is smaller than a change due to the angle $\alpha$ of the signal based on the bending deformation.

When the piezo-resistance region 511A is formed of n-type silicon monocrystal, as shown in Fig. 15A, an absolute value of a resistance value change ratio concerning tensile stress of the piezo-resistance region 511A between the pair of terminals 512A and 513A decreases as the angle $\alpha$ increases. That is, as the angle $\alpha$ increases, the signal based on the bending deformation of the shaft section 14a included in the detection signal of the distortion detecting element 51A decreases. However, a change due to the angle $\alpha$ of the signal based on the bending deformation is small.

On the other hand, in this case, as shown in Fig. 15B, an absolute value of a resistance change ratio concerning shearing stress of the piezo-resistance region 511A between the pair of terminals 512A and 513A increases as the angle $\alpha$ increases. That is, as the angle $\alpha$ increases, the signal based on the torsional deformation of the shaft section 14a included in the detection signal of the distortion detecting element 51A increases. Moreover, a change due to the angle $\alpha$ of the signal based on the torsional deformation is larger than a change due to the angle $\alpha$ of the signal based on the bending deformation.

When the piezo-resistance region 511A is formed of p-type silicon monocrystal, as shown in Fig. 16A, a ratio (R1/R2) of an absolute value (R1) of a resistance change ratio concerning tensile stress and an absolute value (R2) of a resistance change ratio concerning shearing stress of the piezo-resistance region 511A between the pair of terminals 512A and 513A decreases as the angle $\alpha$ increases. That is, as the angle $\alpha$ increases, a ratio of the signal based on the bending deformation to the signal based on the torsional deformation of the shaft section 14a included in the detection signal of the distortion detecting element 51A decreases.

When the piezo-resistance region 511A is formed of n-type silicon monocrystal, as shown in Fig. 16B, the ratio (R1/R2) of the absolute value (R1) of a resistance change ratio concerning tensile stress and the absolute value (R2) of a resistance change ratio concerning shearing stress of the piezo-resistance region 511A between the pair of terminals 512A and 513A decreases as the angle $\alpha$ increases. That is, as the angle $\alpha$ increases, a ratio of the signal based on the bending deformation to the signal based on the torsional deformation of the shaft section 14a included in the detection signal of the distortion detecting element 51A decreases. However, such a ratio is small irrespective of the angle $\alpha$ and a change due to the angle $\alpha$ is also small.

Therefore, when the longitudinal direction of the shaft section 14a is set in the <110> direction of the crystal axis of the silicon monocrystal, by forming the piezo-resistance region 511A with the p-type silicon monocrystal, it is possible to efficiently increase the signals respectively based on the bending deformation and the torsional deformation of the shaft section 14a included in the signal output from the distortion detecting element 51A.

The angle $\alpha$ is different according to a conduction type and the direction of the crystal axis of the silicon monocrystal forming the shaft sections 14a and 14b and is not particularly limited. However, for example, when the longitudinal direction of the shaft sections 14a and 14b is set as the <110> direction of the crystal axis of the silicon monocrystal and the piezo-resistance region 511A is formed of the p-type silicon monocrystal, the angle $\alpha$ is preferably equal to or larger than 3° and equal to or smaller than 25° and more preferably equal to or larger than 5° and equal to or smaller than 8°. As shown in Fig. 16A, by setting the angle $\alpha$ to an angle equal to or larger than 3° and equal to or smaller than 25°, it is possible set the ratio (R1/R2) in a range of about 10% to 90%. By setting the angle $\alpha$ to an angle

equal to or larger than 5° and equal to or smaller than 8°, it is possible to set the ratio (R1/R2) in a range of about 40% to 60%.

The detection signal of the distortion detecting element 51A is input to the first signal processing circuit 71A (the first signal processing section) and the second signal processing circuit 72A (the second signal processing section) via the pair of terminals 81a and 81b provided in the fixed section 15 (see Fig. 11). The detection signal of the distortion detecting element 52A is input to the first signal processing circuit 71A and the second signal processing circuit 72A via a pair of terminals 83a and 83b provided in the fixing section 15.

The first signal processing circuit 71A has a function of converting the detection signals of the distortion detecting elements 51A and 52A into signals suitable for signal processing according to predetermined processing.

Examples of specific processing in the first signal processing circuit 71A includes impedance conversion, temperature compensation, signal amplification, a filter, and an AD converter.

As explained above, the detection signals of the distortion detecting elements 51A and 52A include signals based on bending deformation and torsional deformation of the shaft sections 14a and 14b. The first signal processing circuit 71A performs the processing explained above according to necessity, removes the signals based on the torsional deformation of the shaft sections 14a and 14b from the detection signals of the distortion detecting elements 51A and 52A, and outputs the signals based on the bending deformation of the shaft sections 14a and 14b. Consequently, it is possible to detect the behavior around the Y axis of the movable mirror section 11 on the basis of the signal output from the first signal processing circuit 71A.

In this embodiment, the first signal processing circuit 71A includes, as shown in Fig. 12, the resistance elements 711, 712, and 713 and a processing section 714.

The resistance elements 711, 712, and 713 and the distortion detecting element 51A configure a bridge circuit (a Wheatstone bridge circuit). The bridge circuit receives electric power supplied by the distortion detecting element driving circuit 53 and outputs a signal (a voltage) corresponding to a change in a resistance value of the distortion detecting element 51A to the processing section 714.

The processing section 714 removes a component based on the torsional deformation of the shaft section 14a from the signal (the voltage) from the bridge circuit including the distortion detecting element 51A explained above.

For example, the processing section 714 is a differential amplifier circuit. The processing section 714 amplifies a difference between the signal (the voltage) from the bridge circuit including the distortion detecting element 51A and a signal (a voltage) from a bridge circuit including the distortion detecting element 52A configured in the same way as the bridge circuit. Consequently, it is possible to remove a torsional deformation component included in the signals from the bridge circuits and amplify a bending deformation component.

As explained above, it is possible to efficiently extract the signals based on the bending deformation of the shaft sections 14a and 14b from the detection signals of the pair of distortion detecting elements 51A and 52A arranged in the pair of shaft sections 14a and 14b provided across the frame body section 13.

The signal output from the first signal processing circuit 71A is input to the control section 6 shown in Fig. 11.

On the other hand, the second signal processing circuit 72A has a function of converting the detection signals of the distortion detecting elements 51A and 52A into signals suitable for signal processing according to predetermined processing.

Examples of specific processing in the second signal processing circuit 72A includes impedance conversion, temperature compensation, signal amplification, a filter, and an AD converter.

As explained above, the detection signals of the distortion detecting elements 51A and 52A include signals based on bending deformation and torsional deformation of the shaft sections 14a and 14b. The second signal processing circuit 72A performs the processing explained above according to necessity, removes the signals based on the bending deformation of the shaft sections 14a and 14b from the detection signals of the distortion detecting elements 51A and 52A, and outputs the signals based on the torsional deformation of the shaft sections 14a and 14b. Consequently, it is possible to detect the behavior around the X axis of the movable mirror section 11 on the basis of the signal output from the second signal processing circuit 72A.

For example, the second signal processing circuit 72A includes a differential amplifier circuit. The second signal processing circuit 72A amplifies a sum of a signal (a voltage) from the bridge circuit including the distortion detecting element 51A and a signal (a voltage) from the bridge circuit including the distortion detecting element 52A configured in the same way as the bridge circuit. Consequently, it is possible to remove a bending deformation component included in the signals from the bridge circuits and amplify a torsional deformation component.

As explained above, it is possible to extract, in terms of a constitutional ratio, the signals based on the torsional deformation of the shaft sections 14a and 14b from the detection signals of the pair of distortion detecting elements 51A and 52A arranged in the pair of shaft sections 14a and 14b provided across the frame body section 13.

The signal output from the second signal processing circuit 72A is input to the control section 6 shown in Fig. 11.

With the optical scanner 1A according to the second embodiment explained above, as in the first embodiment, it is possible to detect the behavior of the movable mirror section 11 using the distortion detecting elements 51A and 52A while suppressing the influence of external heat on the distortion detecting elements 51A and 52A.

Third Embodiment

A third embodiment of the invention is explained.

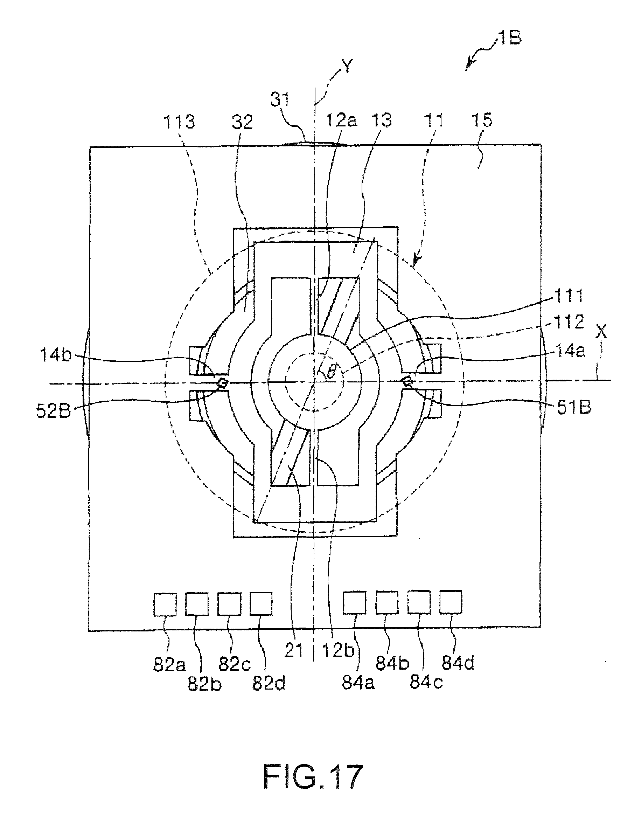

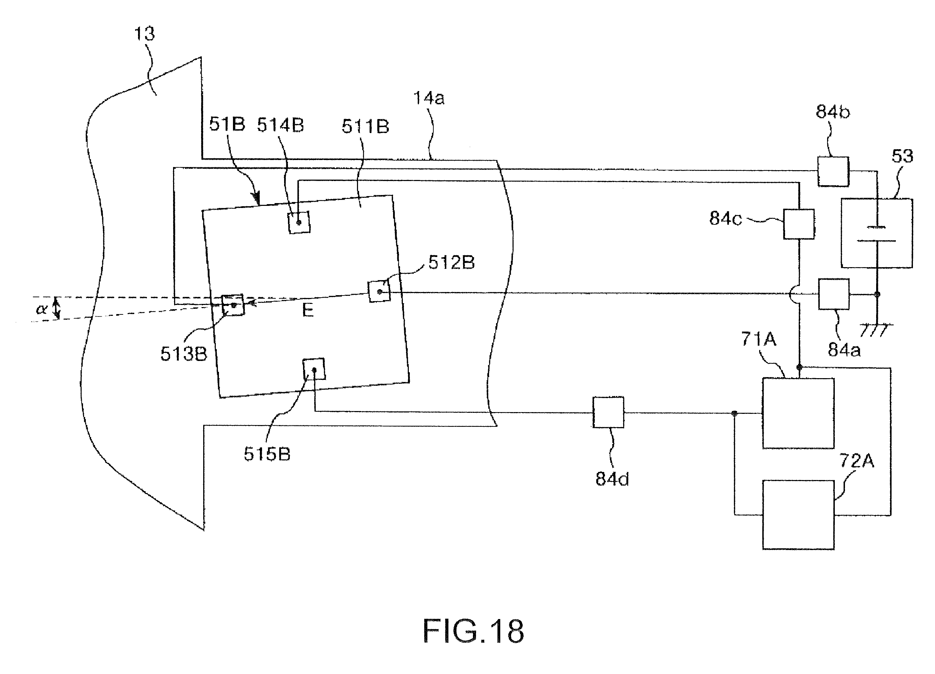

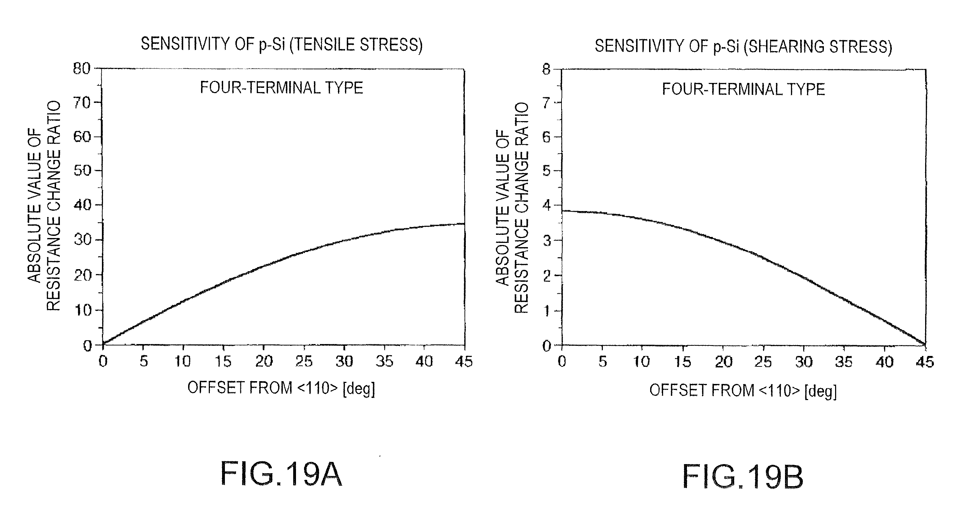

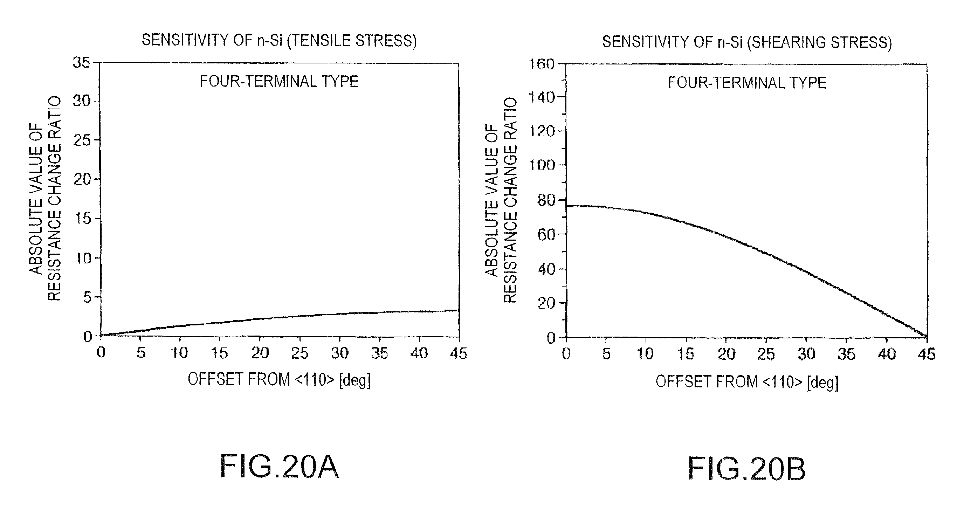

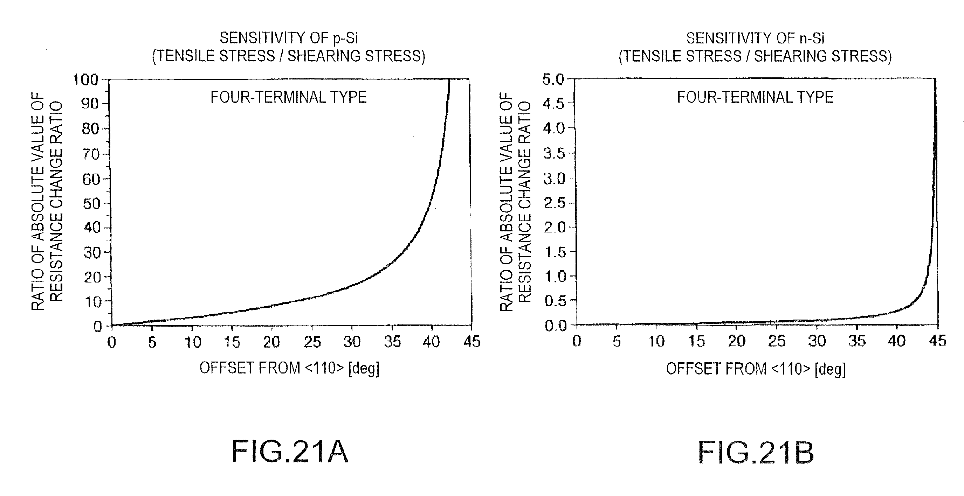

Fig. 17 is a plan view showing an optical scanner according to the third embodiment of the invention. Fig. 18 is a diagram for explaining a distortion detecting element of the optical scanner shown in Fig. 17. Figs. 19A and 19B are graphs showing a relation between the posture (the angle α) of a distortion detecting element of the four-terminal type, in which p-type silicon is used for a piezo-resistance region, and an absolute value of a resistance value change ratio due to tensile stress and shearing stress. Figs. 20A and 20B are graphs showing a relation between the posture (the angle α) of the distortion detecting element of the four-terminal type, in which n-type silicon is used for the piezo-resistance region, and an absolute value of a resistance value change ratio due to tensile stress and shearing stress. Figs. 21A and 21B are graphs showing a relation between the posture (the angle α) of the distortion detecting element of the four-terminal type and a ratio of an absolute value of a resistance value change ratio due to tensile stress and shearing stress.

The optical scanner according to this embodiment is the same as the optical scanner according to the first embodiment except that the configurations of distortion detecting elements, a first signal processing section, and a second signal processing section are different. The optical scanner according to this embodiment is the same as the optical scanner according to the second embodiment except that the configuration of distortion detecting elements is different.

In the following explanation, concerning the third embodiment, differences from the embodiments explained above are mainly explained. Explanation of the similarities is omitted. In Figs. 17 and 18, components same as the components in the embodiments explained above are denoted by the same reference numerals and signs.

An optical scanner 1B shown in Fig. 17 includes distortion detecting elements 51B and 52B instead of the distortion detecting elements 51A and 52A in the second embodiment.

The distortion detecting element 51B (the first distortion detecting element) is arranged at the end on the frame body section 13 side of the shaft section 14a and detects deformation (bending deformation and torsional deformation) of the shaft section 14a. On the other hand, the distortion detecting element 52B (the second distortion detecting element) is arranged at the end on the frame body section 13 side of the shaft section 14b and detects deformation (bending deformation and torsional deformation) of the shaft section 14b.

The distortion detecting elements 51B and 52B are arranged to be symmetrical with respect to the Y axis in plan view. In the following explanation, the distortion detecting element 51B is mainly explained. Since the distortion detecting element 52B is the same as the distortion detecting element 51B, explanation of the distortion detecting element 52B is omitted.

The distortion detecting element 51B is a piezo-resistance element of the four-terminal type.

Specifically, the distortion detecting element 51B includes, as shown in Fig. 18, a piezo-resistance region 511B and a pair of input terminals 512B and 513B and a pair of output terminals 514B and 515B arranged on the piezo-resistance region 511B.

The piezo-resistance region 511B is formed by doping impurities on the surface of the shaft section 14a.

In this embodiment, the piezo-resistance region 511B is formed in a square shape in plan view.

In this embodiment, the entire piezo-resistance region 511B is provided on the shaft section 14a. However, the piezo-resistance region 511B is not limited to the position shown in the figure as long as the piezo-resistance region 511B can receive tensile stress or compression stress due to bending deformation of the shaft section 14a and receive shearing stress due to torsional deformation of the shaft section 14a. For example, the piezo-electric region 511B may be provided across the boundary between the shaft section 14a and the fixed section 15.

On the piezo-resistance region 511B, the pair of input terminals 512B and 513B is arranged side by side in the direction inclining with respect to the longitudinal direction of the shaft section 14a (i.e., the X-axis direction) and the pair of output terminals 514B and 515B is arranged side by side in a direction perpendicular to the direction in which the pair of input terminals 512B and 513B are arranged.

The pair of input terminals 512B and 513B are electrically connected to the distortion detecting element driving circuit 53 via a pair of terminals 84a and 84b provided in the fixed section 15.

On the other hand, the pair of output terminals 514B and 515B is electrically connected to the first signal processing circuit 71A and the second signal processing circuit 72A via a pair of terminals 84c and 84d provided in the fixed section 15.

In the distortion detecting element 51B, the distortion detecting element driving circuit 53 applies a voltage between the pair of input terminals 512B and 513B at a constant voltage or a constant current. Consequently, an electric field E in the direction inclining with respect to the longitudinal direction of the shaft section 14a is generated on the piezo-resistance region 511B. Under the electric field E, when shearing stress occurs in the piezo-resistance region 511B according to torsional deformation of the shaft section 14a, according to a degree of the shearing stress, a specific resistance value of the piezo-resistance region 511B changes and a potential difference between the pair of output terminals 514B and 515B changes.

The potential difference changes according to a torsional deformation amount of the shaft section 14a and a swinging angle around the X axis of the movable mirror section 11 and the frame body section 13. Therefore, it is possible to detect the behavior around the X axis of the movable mirror section 11 on the basis of the potential difference.

Under the electric field E, when tensile stress occurs in the piezo-resistance region 511B according to bending deformation of the shaft section 14a, according to a degree of the tensile stress, a specific resistance value of the piezo-resistance region 511B changes and a potential difference between the pair of output terminals 514B and 515B changes.

The potential difference changes according to a torsional deformation amount of the shaft section 14a and a swinging angle around the Y axis of the movable mirror section 11 and the frame body section 13. Therefore, it is possible to detect the behavior around the Y axis of the movable mirror section 11 on the basis of the potential difference.

Therefore, the detection signal of the distortion detecting element 51B includes the signals based on the bending deformation and the torsional deformation of the shaft section 14a.

In this embodiment, the pair of input terminals 512B and 513B are arranged side by side in the direction inclining with respect to the X-axis direction on the piezo-resistance region 511B. Therefore, it is possible to increase the signals respectively based on the bending deformation and the torsional deformation of the shaft section 14a included in the signal output from the distortion detecting element 51B.

A ratio of the signal based on the bending deformation of the shaft section 14a and the signal based on the torsional deformation of the shaft section 14a included in the detection signal of the distortion detecting element 51B changes according to an angle $\alpha$ (an inclination angle) of the distortion detecting element 51B. The angle $\alpha$ is an angle formed by the longitudinal direction of the shaft section 14a (i.e., the X-axis direction) and a direction in which the pair of input terminals 512B and 513B is arranged (a direction of a straight line connecting the pair of input terminals 512B and 513B in a shortest distance).

The detection signal of the distortion detecting element 51B is explained in detail in an example in which the longitudinal direction of the shaft section 14a is set in a <110> direction of a crystal axis of silicon monocrystal.

When the piezo-resistance region 511B is formed of p-type silicon monocrystal, as shown in Fig. 19A, an absolute value of a resistance value change ratio concerning tensile stress of the piezo-resistance region 511B between the pair of output terminals 514B and 515B increases as the angle $\alpha$ (offset from <110>) increases. That is, as the angle $\alpha$ increases, the signal based on the bending deformation of the shaft section 14a included in the detection signal of the distortion detecting element 51B increases.

On the other hand, in this case, as shown in Fig. 19B, an absolute value of a resistance value change ratio concerning shearing stress of the piezo-resistance region 511B between the pair of output terminals 514B and 515B decreases as the angle $\alpha$ increases. That is, as the angle $\alpha$ increases, the signal based on the torsional deformation of the shaft section 14a included in the detection signal of the distortion detecting element 51B decreases. However, a change due to the angle $\alpha$ of the signal based on the torsional deformation is smaller than a change due to the angle $\alpha$ of the signal based on the bending deformation.

When the piezo-resistance region 511B is formed of n-type silicon monocrystal, as shown in Fig. 20A, an absolute value of a resistance value change ratio concerning tensile stress of the piezo-resistance region 511B between the pair of output terminals 514B and 515B increases as the angle $\alpha$ increases. That is, as the angle $\alpha$ increases, the signal based on the bending deformation of the shaft section 14a included in the detection signal of the distortion detecting element 51B increases. However, a change due to the angle $\alpha$ of the signal based on the bending deformation is small.

On the other hand, in this case, as shown in Fig. 20B, an absolute value of a resistance change ratio concerning shearing stress of the piezo-resistance region 511B between the pair of output terminals 514B and 515B decreases as the angle $\alpha$ increases. That is, as the angle $\alpha$ increases, the signal based on the torsional deformation of the shaft section 14a included in the detection signal of the distortion detecting element 51B decreases. However, a change due to the angle $\alpha$ of the signal based on the torsional deformation is larger than a change due to the angle $\alpha$ of the signal based on the bending deformation.

When the piezo-resistance region 511B is formed of p-type silicon monocrystal, as shown in Fig. 21A, a ratio (R1/R2) of an absolute value (R1) of a resistance change ratio concerning tensile stress and an absolute value (R2) of a resistance change ratio concerning shearing stress of the piezo-resistance region 511B between the pair of output terminals 514B and 515B increases as the angle $\alpha$ increases. That is, as the angle $\alpha$ increases, a ratio of the signal based on the bending deformation to the signal based on the torsional deformation of the shaft section 14a included in the detection signal of the distortion detecting element 51B increases.

When the piezo-resistance region 511B is formed of n-type silicon monocrystal, as shown in Fig. 21B, the ratio (R1/R2) of the absolute value (R1) of a resistance change ratio concerning tensile stress and the absolute value (R2) of a resistance change ratio concerning shearing stress of the piezo-resistance region 511B between the pair of output terminals 514B and 515B increases as the angle $\alpha$ increases. That is, as the angle $\alpha$ increases, a ratio of the signal based on the bending deformation to the signal based on the torsional deformation of the shaft section 14a included in the detection signal of the distortion detecting element 51B increases. However, such a ratio is small irrespective of the angle $\alpha$ and a change due to the angle $\alpha$ is also small.

Therefore, when the longitudinal direction of the shaft section 14a is set in the <110> direction of the crystal axis of the silicon monocrystal, by forming the piezo-resistance region 511B with the p-type silicon monocrystal, it is possible to efficiently increase the signals respectively based on the bending deformation and the torsional deformation of the shaft section 14a included in the signal output from the distortion detecting element 51B.

The angle $\alpha$ is different according to a conduction type and the direction of the crystal axis of the silicon monocrystal forming the shaft sections 14a and 14b and is not particularly limited. However, for example, when the longitudinal direction of the shaft sections 14a and 14b is set as the <110> direction of the crystal axis of the silicon monocrystal and the piezo-resistance region 511B is formed of the p-type silicon monocrystal, the angle $\alpha$ is preferably equal to or larger than 22° and equal to or smaller than 42° and more preferably equal to or larger than 38° and equal to or smaller than 42°. As shown in Fig. 21A, by setting the angle $\alpha$ to an angle equal to or larger than 22° and equal to or smaller than 42°, it is possible set the ratio (R1/R2) in a range of about 10% to 90%. By setting the angle $\alpha$ to an angle equal to or larger than 38° and equal to or smaller than 42°, it is possible to set the ratio (R1/R2) in a range of about 40% to 60%.

The detection signal of the distortion detecting element 51B is input to the first signal processing circuit 71A (the first signal processing section) and the second signal processing circuit 72A (the second signal processing section) . Similarly, the detection signal of the distortion detecting element 52B is input to the first signal processing circuit 71A and the second signal processing circuit 72A. The distortion detecting element 52A is electrically connected to the distortion detecting element driving circuit 53 via the terminals 82a and 82b and electrically connected to the first signal processing circuit 71A and the second signal processing circuit 72A via the terminals 82c and 82d.

For example, the first signal processing circuit 71A includes a differential amplifier circuit. The first signal processing circuit 71A amplifies a difference between the detection signal of the distortion detecting element 51B and a signal of the distortion detecting element 52B configured in the same way as the distortion detecting element 51B. Consequently, it is possible to remove a torsional deformation component included in the signals from the distortion detecting elements 51B and 52B and amplify a bending deformation component.

Similarly, for example, the second signal processing circuit 72A includes a differential amplifier circuit. The second signal processing circuit 72A amplifies a sum of the detection signal of the distortion detecting element 51B and a detection signal of the distortion detecting element 52B configured in the same way as the distortion detecting element 51B. Consequently, it is possible to remove a bending deformation component included in the signals from the distortion detecting elements 51B and 52B and amplify a torsional deformation component.

With the optical scanner 1B according to the third embodiment explained above, as in the first and second embodiments, it is possible to detect the behavior of the movable mirror section 11 using the distortion detecting elements 51A and 52A while suppressing the influence of external heat on the distortion detecting elements 51A and 52A.


Fourth Embodiment

A fourth embodiment of the invention is explained.

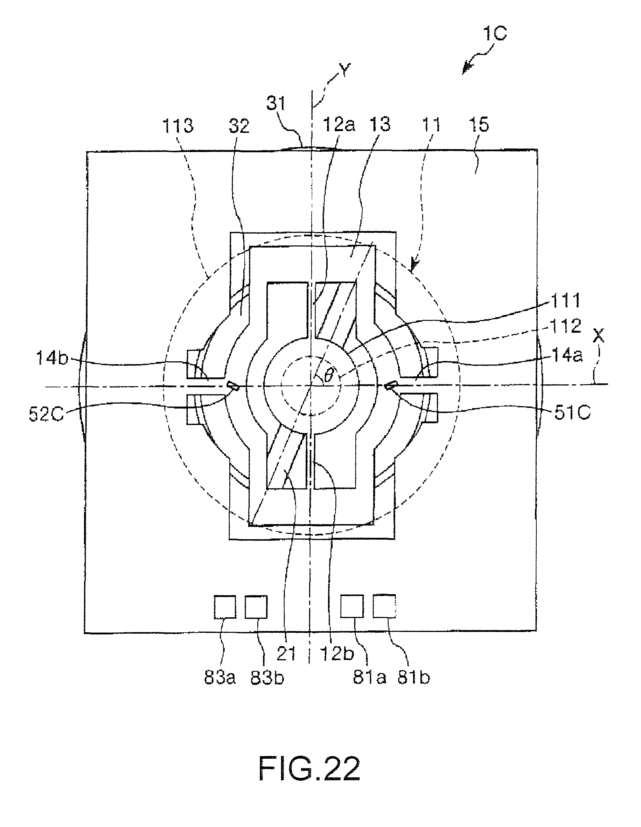

Fig. 22 is a plan view showing an optical scanner according to the fourth embodiment of the invention.

The optical scanner according to this embodiment is the same as the optical scanner according to the second embodiment except that setting positions of distortion detecting elements are different.

In the following explanation, concerning the fourth embodiment, differences from the embodiments explained above are mainly explained. Explanation of the similarities is omitted. In Fig. 22, components same as the components in the embodiments explained above are denoted by the same reference numerals and signs.

An optical scanner 1C shown in Fig. 22 includes distortion detecting elements 51C and 52C instead of the distortion detecting elements 51A and 52A in the second embodiment.

The distortion detecting element 51C is arranged in a portion near the shaft section 14a of the frame body section 13. In the portion, stress is generated according to deformation of the shaft section 14a. The distortion detecting element 52C is arranged in a portion near the shaft section 14b of the frame body section 13. In the portion, stress is generated according to deformation of the shaft section 14b.

Like the distortion detecting elements 51A and 52A in the second embodiment, the distortion detecting elements 51C and 52C are respectively piezo-resistance elements of the two-terminal type and are arranged to incline with respect to the X axis.

Like the detection signals of the distortion detecting elements 51A and 52A in the second embodiment, detection signals of the distortion detecting elements 51C and 52C include signals based on torsional deformation and signals based on bending deformation of the shaft sections 14a and 14b.

With the optical scanner 1C according to the fourth embodiment explained above, as in the first to third embodiments, it is possible to detect the behavior of the movable mirror section 11 using the distortion detecting elements 51C and 52C while suppressing the influence of external heat on the distortion detecting elements 51C and 52C.

Fifth Embodiment

A fifth embodiment of the invention is explained.

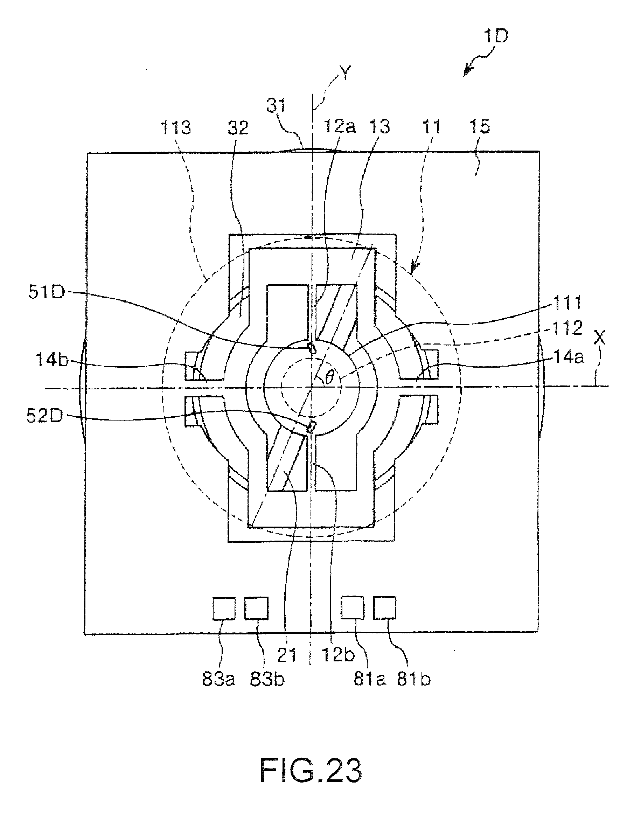

Fig. 23 is a plan view showing an optical scanner according to the fifth embodiment of the invention.

The optical scanner according to this embodiment is the same as the optical scanner according to the second embodiment except that setting positions of distortion detecting elements are different.

In the following explanation, concerning the fifth embodiment, differences from the embodiments explained above are mainly explained. Explanation of the similarities is omitted. In Fig. 23, components same as the components in the embodiments explained above are denoted by the same reference numerals and signs.

An optical scanner 1D shown in Fig. 23 includes distortion detecting elements 51D and 52D instead of the distortion detecting elements 51A and 52A in the second embodiment.

The distortion detecting element 51D is arranged in a portion near the shaft section 12a of the base section 111. In the portion, stress is generated according to deformation of the shaft section 12a. The distortion detecting element 52D is arranged in a portion near the shaft section 12b of the base section 111. In the portion, stress is generated according to deformation of the shaft section 12b.

Like the distortion detecting elements 51A and 52A in the second embodiment, the distortion detecting elements 51D and 52D are respectively piezo-resistance elements of the two-terminal type and are arranged to incline with respect to the Y axis.

To detect the behavior of the frame body section 13 using detection signals of the distortion detecting elements 51D and 52D, a relation opposite to the detection method explained in the first embodiment only has to be used.

With the optical scanner 1D according to the fifth embodiment explained above, as in the first to fourth embodiments, it is possible to detect the behavior of the movable mirror section 11 using the distortion detecting elements 51D and 52D while suppressing the influence of external heat on the distortion detecting elements 51D and 52D.

Sixth Embodiment

A sixth embodiment of the invention is explained.

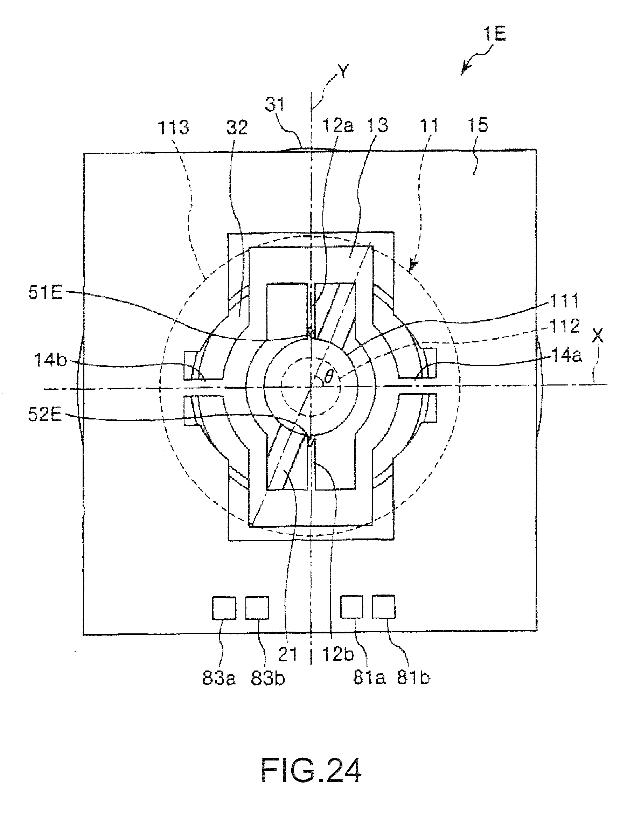

Fig. 24 is a plan view showing an optical scanner according to the sixth embodiment of the invention.

The optical scanner according to this embodiment is the same as the optical scanner according to the second embodiment except that setting positions of distortion detecting elements are different.

In the following explanation, concerning the sixth embodiment, differences from the embodiments explained above are mainly explained. Explanation of the similarities is omitted. In Fig. 24, components same as the components in the embodiments explained above are denoted by the same reference numerals and signs.

An optical scanner 1E shown in Fig. 24 includes distortion detecting elements 51E and 52E instead of the distortion detecting elements 51A and 52A in the second embodiment.

The distortion detecting element 51E is arranged at the end on the base section 111 side of the shaft section 12a. At the end, stress is generated according to deformation of the shaft section 12a. The distortion detecting element 52E is arranged at the end on the base section 111 side of the shaft section 12b. At the end, stress is generated according to deformation of the shaft section 12b.

Like the distortion detecting elements 51A and 52A in the second embodiment, the distortion detecting elements 51E and 52E are respectively piezo-resistance elements of the two-terminal type and are arranged to incline with respect to the Y axis.

To detect the behavior of the frame body section 13 using detection signals of the distortion detecting elements 51E and 52E, a relation opposite to the detection method explained in the first embodiment only has to be used.

With the optical scanner 1E according to the sixth embodiment explained above, as in the first to fifth embodiments, it is possible to detect the behavior of the movable mirror section 11 using the distortion detecting elements 51E and 52E while suppressing the influence of external heat on the distortion detecting elements 51E and 52E.

Each of the optical scanners explained above can be suitably applied to optical scanners included in image display apparatuses such as displays for imaging, for example, a projector, a head-up display (HUD), and a head mounted display (HMD). The image display apparatuses have excellent reliability and can display high definition images.

Embodiment of an image display apparatus

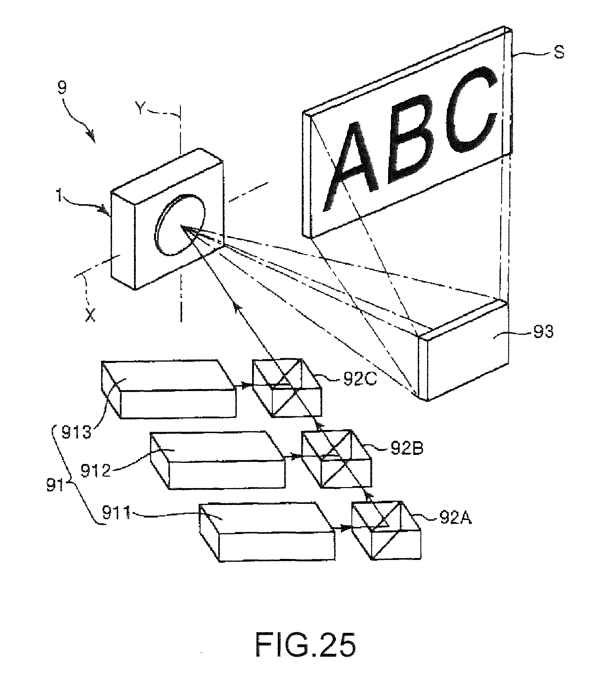

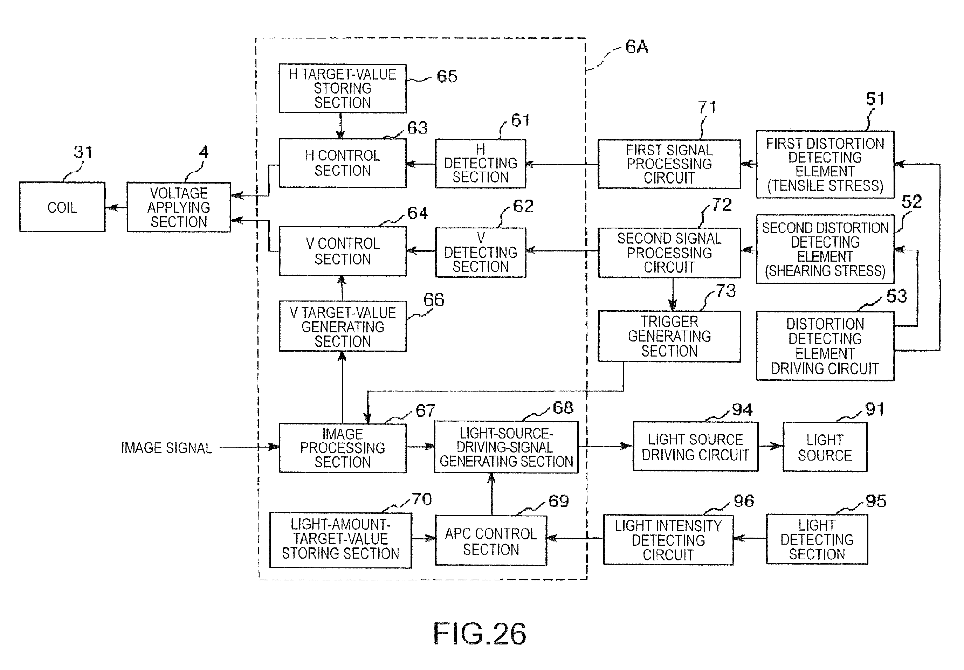

Fig. 25 is a diagram schematically showing an embodiment of an image display apparatus according to the invention. Fig. 26 is a block diagram showing a control system of the image display apparatus shown in Fig. 25. In Fig. 26, components same as the components explained above are denoted by the same reference numerals and signs.

In this embodiment, as an example of the image display apparatus, the optical scanner 1 is used as an optical scanner of a display for imaging. A longitudinal direction of a screen S is referred to as "lateral direction" and a direction perpendicular to the longitudinal direction is referred to as "longitudinal direction". The X axis is parallel to the lateral direction of the screen S and the Y axis is parallel to the longitudinal direction of the screen S.

An image display apparatus (a projector) 9 includes a light source device (a light source) 91 configured to emit light such as a laser, a plurality of dichroic mirrors 92A, 92B, and 92C, the optical scanner 1, a light source driving circuit 94, a light detecting section 95, a light intensity detecting circuit 96, a control section 6A, and a trigger generating section 73.

The trigger generating section 73 generates, on the basis of a signal output from a second signal processing circuit, a signal for generating trigger for starting rendering in a horizontal scanning direction. The trigger generating section 73 is, for example, a comparator.

The control section 6A includes an image processing section 67, a light-source-driving-signal generating section 68, an APC control section 69, and a light-amount-target-value storing section 70.

The image processing section 67 receives an image signal, generates a rendering signal necessary for rendering on the basis of the image signal, and outputs the rendering signal to the light-source-driving-signal generating section 68 on the basis of a signal output from the trigger generating section 73. The image processing section 67 outputs line information in a vertical scanning direction to the V-target-value generating section 66.

The light-source-driving-signal generating section 68 generates, on the basis of the rendering signal output from the image processing section 67, a driving signal for driving the light source driving circuit 94. Association of the rendering signal from the image processing section 67 and the driving signal for the light source driving circuit 94 is periodically updated on the basis of a signal from the APC control section 69.

The APC control section 69 outputs, to the light-source-driving-signal generating section 68, a signal for correcting the association such that correspondence between light emission intensity of the light source device 91 and data of an image signal is a target value irrespective of an environmental change.

The light source driving circuit 94 generates, on the basis of a driving signal from the light-source-driving-signal generating section 68, a driving current for driving the light source device 91.

The light intensity detecting circuit 96 converts an output from the light detecting section 95 such as a photodiode configured to detect light emission intensity of the light source device 91 into a signal necessary for signal processing. The light intensity detecting circuit 96 includes, for example, an amplifier circuit, a filter, and an AD converter.

The light source device 91 includes a red light source device 911 configured to emit red light, a blue light source device 912 configured to emit blue light, and a green light source device 913 configured to emit green light.

The dichroic mirrors 92A, 92B, and 92C are optical elements configured to combine lights respectively emitted from the red light source device 911, the blue light source device 912, and the green light source device 913.

An image display apparatus 9 combines respectively in the dichroic mirrors 92A, 92B, and 92C on the basis of image information (an image signal) from a not-shown host computer, lights emitted from the light source device 91 (the red light source device 911 (the blue light source device 912, and the green light source device 913). The combined light is two-dimensionally scanned by the optical scanner 1 to form a color image on the screen S.

In the two dimensional scanning, light reflected on the light reflecting section 114 according to pivoting around the Y axis of the movable mirror section 11 of the optical scanner 1 is scanned (main-scanned) in the lateral direction of the screen S. On the other hand, light reflected on the light reflecting section 114 according to pivoting around the X axis of the movable mirror section 11 of the optical scanner 1 is scanned (sub-scanned) in the longitudinal direction of the screen S.

In Fig. 25, after the light combined by the dichroic mirrors 92A, 92B, and 92C is two-dimensionally scanned by the optical scanner 1, the light is reflected by the fixed mirror 93 to form an image on the screen S. However, the fixed mirror 93 may be omitted and the light two-dimensionally scanned by the optical scanner 1 may be directly irradiated on the screen S.

Application examples of the image display apparatus are explained below.

Application example 1 of the image display apparatus

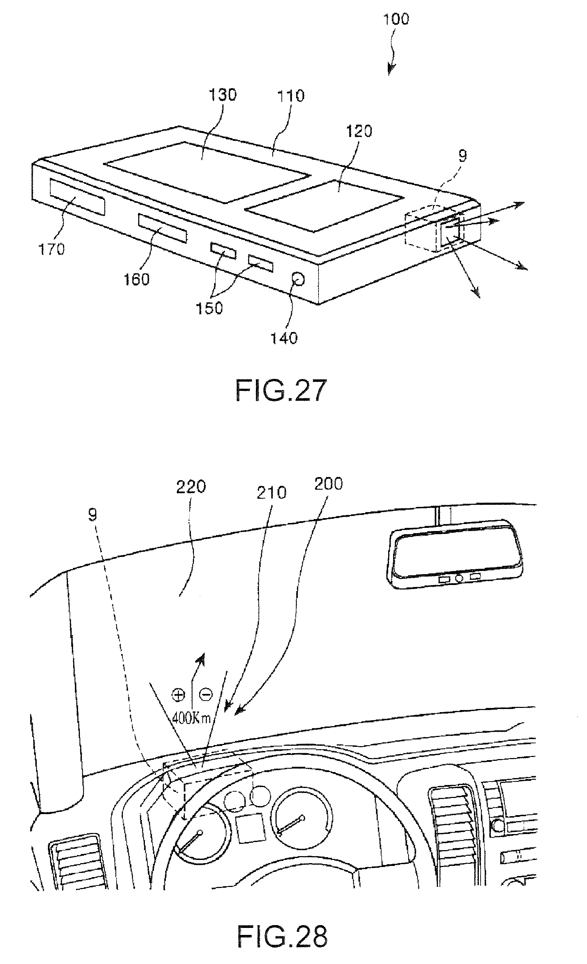

Fig. 27 is a perspective view showing an application example 1 of the image display apparatus according to the invention.

As shown in Fig. 27, the image display apparatus 9 can be applied to a portable image display apparatus 100.

The portable image display apparatus 100 includes a casing 110 formed in dimensions for enabling gripping by a hand and the image display apparatus 9 incorporated in the casing 110. With the portable image display apparatus 100, it is possible to display a predetermined image on a predetermined surface on, for example, a screen or a desk.

The portable image display apparatus 100 includes a display 120 configured to display predetermined information, a keypad 130, an audio port 140, a control button 150, a card slot 160, and an AV port 170.

The portable image display apparatus 100 may include other functions such as a telephone call function and a GPS reception function.

Application example 2 of the image display apparatus

Fig. 28 is a perspective view showing an application example 2 of the image display apparatus according to the invention.

As shown in Fig. 28, the image display apparatus 9 can be applied to a head-up display system 200.

In the head-up display system 200, the image display apparatus 9 is mounted on a dashboard of an automobile to configure a head-up display 210. A predetermined image such as guidance display to a destination can be displayed on a windshield 220 by the head-up display 210.

The head-up display system 200 is not limited to the automobile and can also be applied to, for example, an airplane and a ship.

Application example 3 of the image display apparatus

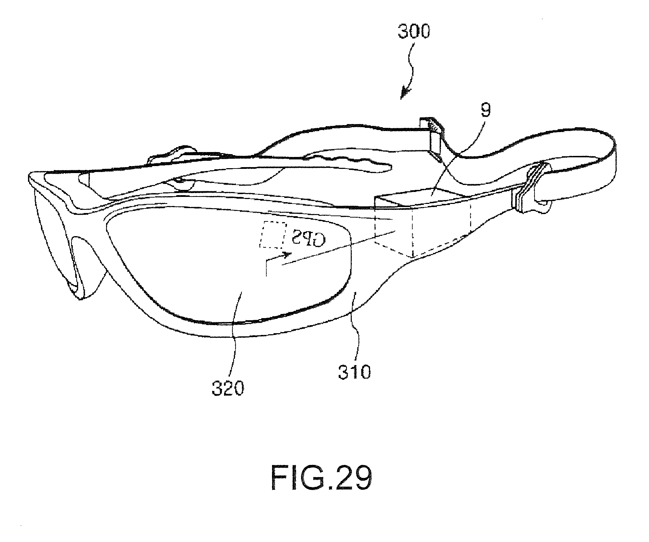

Fig. 29 is a perspective view showing an application example 3 of the image display apparatus according to the invention.

As shown in Fig. 29, the image display apparatus 9 can be applied to a head mounted display 300.

The head mounted display 300 includes eyeglasses 310 and the image display apparatus 9 mounted on the eyeglasses 310. A predetermined image visually recognized by one eye is displayed by the image display apparatus 9 on a display section 320 provided in a part, which is originally a lens, of the eyeglasses 310.

The display section 320 may be transparent or may be nontransparent. When the display section 320 is transparent, information from the image display apparatus 9 can be superimposed on information from the real world and used.

Two image display apparatuses 9 may be provided on the head mounted display 300 to display, on two display sections, an image visually recognized by both the eyes.

The optical scanner, the image display apparatus, and the head mounted display according to the invention are explained on the basis of the embodiments shown in the figures. However, the invention is not limited to the embodiments. For example, in the optical scanner, the image display apparatus, and the head mounted display according to the invention, the components of the sections can be replaced with arbitrary components having the same functions. Other arbitrary components can be added.

The invention may be a combination of arbitrary two or more components (features) among the embodiments.

In the example explained in the embodiments, the moving magnet system is adopted as the driving system for the optical scanner or the actuator. However, the driving system is not limited to this. The invention can also be applied to an optical scanner or an actuator that adopts a moving coil system. The invention is not limited to the electromagnetic driving systems such as the moving magnet system and the moving coil system and can also be applied to other driving systems such as a piezoelectric driving system and an electrostatic driving system.

In the example explained in the embodiments, the two (the pair of) first shaft sections are provided. However, the number of the first shaft sections is not limited to this. For example, four (two pairs of) or more first shaft sections may be provided.

In the example explained in the embodiments, the two (the pair of) second shaft sections are provided. However, the number of the second shaft sections is not limited to this. For example, four (two pairs of) or more second shaft sections may be provided.

In the example explained in the embodiments, the light reflection plate covers the entire first shaft section, the entire frame body section, and the entire second shaft section in plan view. However, if the light reflection plate covers at least a part (the end on the base section side of the movable mirror section) of the first shaft section in plan view, the effects of a reduction in the size of the optical device, an increase in the area of the light reflection plate, suppression of motion bending of the light reflection plate, and suppression of stray light due to the end on the base section side of the first shaft section can be attained.

In the example explained in the embodiments, the light reflection plate and the spacer are formed by machining the SOI substrate. However, the light reflection plate and the spacer are not limited to this. For example, the light reflection plate and the spacer may be formed from separate substrates.

The spacer between the light reflection plate and the base section may be solder balls. In this case, for example, it is sufficient to form metal films respectively on surfaces on the spacer side of the light reflection plate and the base section and join the metal films via the solder balls.

In the example explained in the embodiments, the light reflecting section is provided on the light reflection plate. However, the light reflecting section is not limited to this. For example, the light reflection plate may be omitted and the light reflecting section may be provided on the base section (the movable section).

The arrangement, the number of pieces, the shape, the size, the number of terminals, and the like of the first distortion detecting element are not limited to the embodiments as long as the first distortion detecting element can detect bending deformation of the second shaft section. A publicly-known distortion detecting element can be used as the first distortion detecting element. For example, two piezo-resistance elements of the two-terminal type such as the distortion detecting elements 51 in the embodiments may be arranged side by side in the width direction of the second shaft section. In this case, a torsional deformation component included in a detection signal of one piezo-resistance element and a torsional deformation component included in a detection signal of the other piezo-resistance element can be offset to output only a bending deformation component.

The arrangement, the number of pieces, the shape, the size, the number of terminals, and the like of the second distortion detecting element are not limited to the embodiments as long as the second distortion detecting element can detect torsional deformation of the second shaft section. A publicly-known distortion detecting element can be used as the second distortion detecting element. For example, two piezo-resistance elements of the two-terminal type may be arranged side by side in the width direction of the second shaft section. In this case, a bending deformation component included in a detection signal of one piezo-resistance element and a bending deformation component included in a detection signal of the other piezo-resistance element can be offset to output only a torsional deformation component.

The setting position of the distortion detecting element is not limited to the embodiments as long as the setting position is the end on the frame body section side of the second shaft section or any one of the movable section, the frame body section, and the first shaft section and may be a position of the frame body section or the movable section apart from the first shaft section or the second shaft section. In this case, for example, the movable section or the frame body section can be configured to be deformable according to swinging around the first axis or the second axis. The behavior around the first axis or around the second axis of the movable section can be detected by the observer on the basis of a detection signal of the distortion detecting element.

The distortion detecting element may be arranged across the frame body section and the second shaft section, the frame body section and the first shaft section, or the first shaft section and the movable section.

When the distortion detecting element is arranged in the first shaft section and the behavior around the second axis of the movable section is detected using a detection signal of the distortion detecting element, estimation having an opposite relation with the estimation by the observer in the embodiments only has to be performed.

**Claims**

1. An optical scanner (1) comprising:

   a movable section (111) including a light reflecting section having light reflectivity and swingable around a first axis;
   a frame body section (13) swingable around a second axis crossing the first axis;
   a first shaft section (12a, 12b) configured to connect the movable section (111) and the frame body section (13);
   a fixed section (15);
   a second shaft section (14a, 14b) configured to connect the frame body section (13) and the fixed section (15);
   a distortion detecting element (51, 52) arranged at an end on the frame body section side of the second shaft section (14a, 14b) or in any one of the movable section (111), the frame body section (13), and the first shaft section (12a, 12b), and configured to detect deformation of the second shaft section (14a, 14b);
   a first signal processing section (71) configured to receive a detection signal of the distortion detecting element (51, 52) and output a signal based on bending deformation of the second shaft section (14a, 14b); and
   a second signal processing section (72) configured to receive the detection signal of the distortion detecting element (51, 52) and output a signal based on torsional deformation of the second shaft section (14a, 14b).

2. The optical scanner (1) according to claim 1, wherein the distortion detecting element (51, 52) includes:

   a piezo-resistance region (511); and
   a pair of terminals (512, 513) arranged side by side in a direction inclining with respect to a longitudinal direction of the second shaft section (14a, 14b) on the piezo-resistance region (511).

3. The optical scanner (1) according to claim 2, wherein
   a pair of the second shaft sections (14a, 14b) are provided across the frame body section (13), and
   the distortion detecting element (51, 52) is arranged in each of the pair of second shaft sections (14a, 14b).

4. The optical scanner (1) according to claim 1, comprising
   a first distortion detecting element (51) arranged at an end on the frame body section side of the second shaft section (14a, 14b) or in any one of the movable section (111), the frame body section (13), and the first shaft section (12a, 12b), and

a second distortion detecting element (52) arranged at the end on the frame body section side of the second shaft section (14a, 14b) or in any one of the movable section (111), the frame body section (13), and the first shaft section (12a, 12b); wherein

the first signal processing section (71) is configured to receive a detection signal of the first distortion detecting element (51) and output a signal based on bending deformation of the second shaft section (14a, 14b), and

the second signal processing section (72) is configured to receive a detection signal of the second distortion detecting element (52) and output a signal based on torsional deformation of the second shaft section (14a, 14b).

5. The optical scanner (1) according to claim 4, wherein the first distortion detecting element (51) is arranged at the end on the frame body section side of the second shaft section (14a, 14b).

6. The optical scanner (1) according to claim 5, wherein the first distortion detecting element (51) includes:

a piezo-resistance region (511) formed in a longitudinal shape extending in a direction along a longitudinal direction of the second shaft section (14a, 14b); and

a pair of terminals (512, 513) arranged side by side in the direction along the longitudinal direction of the second shaft section (14a, 14b) on the piezo-resistance region (511).

7. The optical scanner (1) according to claim 4, wherein the optical scanner (1) detects behavior around the first axis of the movable section (111) on the basis of the signal output from the first signal processing section (71).

8. The optical scanner (1) according to claim 7, wherein the optical scanner (1) estimates, using an observer, the behavior around the first axis of the movable section (111) on the basis of the signal output from the first signal processing section (71).

9. The optical scanner (1) according to claim 7, wherein the optical scanner (1) estimates the behavior around the first axis of the movable section (111) on the basis of the signal output from the first signal processing section (71) using a ratio of amplitude in a resonance frequency concerning swinging around the first axis of the movable section (111) and amplitude in a resonance frequency concerning swinging around the first axis of the frame body section (13).

10. The optical scanner (1) according to claim 4, wherein the second distortion detecting element (52) is arranged at the end on the frame body section side of the second shaft section (14a, 14b) and detects deformation of the second shaft section (14a, 14b).

11. The optical scanner (1) according to claim 10, wherein the optical scanner (1) detects the behavior around the second axis of the movable section (111) on the basis of the signal output from the second signal processing section (72).

12. An image display apparatus (9) comprising:

the optical scanner (1) according to any one of claims 1 to 11; and

a light source (91) configured to emit light, wherein

the image display apparatus (9) reflects, with the light reflecting section, the light emitted from the light source (91) and displays an image.

13. A head mounted display (300) comprising:

the optical scanner (1) according to any one of claims 1 to 11; and

a light source (91) configured to emit light, wherein

the head mounted display (300) reflects, with the light reflecting section, the light emitted from the light source (91) and displays an image.

FIG. 1

FIG. 2

FIG. 3

FIG. 4

EP 2 781 949 A1

FIRST VOLTAGE
(HORIZONTAL SCANNING DRIVING SIGNAL)

FIG. 5A

SECOND VOLTAGE
(VERTICAL SCANNING DRIVING SIGNAL)

FIG. 5B

FIG. 6

FIG. 7

FIG. 8A

FIG. 8B

FIG. 9A

FIG. 9B

FIG.10

FIG.11

51A FIRST DISTORTION DETECTING ELEMENT (TENSILE / SHEARING)

52A SECOND DISTORTION DETECTING ELEMENT (TENSILE / SHEARING)

53 DISTORTION DETECTING ELEMENT DRIVING CIRCUIT

71A FIRST SIGNAL PROCESSING CIRCUIT (TENSILE)

72A SECOND SIGNAL PROCESSING CIRCUIT (SHEARING)

6

61 H DETECTING SECTION

62 V DETECTING SECTION

65 H TARGET-VALUE STORING SECTION

63 H CONTROL SECTION

64 V CONTROL SECTION

66 V TARGET-VALUE GENERATING SECTION

4 VOLTAGE APPLYING SECTION

31 COIL

FIG.12

EP 2 781 949 A1

14a

51A

$\alpha$

<110>

FIG.13

SENSITIVITY OF p-Si (TENSILE STRESS)

TWO-TERMINAL TYPE

ABSOLUTE VALUE OF RESISTANCE CHANGE RATIO

OFFSET FROM <110> [deg]

FIG.14A

SENSITIVITY OF p-Si (SHEARING STRESS)

TWO-TERMINAL TYPE

ABSOLUTE VALUE OF RESISTANCE CHANGE RATIO

OFFSET FROM <110> [deg]

FIG.14B

SENSITIVITY OF n-Si (TENSILE STRESS)

SENSITIVITY OF n-Si (SHEARING STRESS)

FIG.15A

FIG.15B

EP 2 781 949 A1

SENSITIVITY OF p-Si
(TENSILE STRESS / SHEARING STRESS)

TWO-TERMINAL TYPE

FIG.16A

SENSITIVITY OF n-Si
(TENSILE STRESS / SHEARING STRESS)

TWO-TERMINAL TYPE

FIG.16B

FIG.17

FIG.18

SENSITIVITY OF p-Si (SHEARING STRESS)

FOUR-TERMINAL TYPE

ABSOLUTE VALUE OF
RESISTANCE CHANGE RATIO

OFFSET FROM <110> [deg]

FIG.19B

SENSITIVITY OF p-Si (TENSILE STRESS)

FOUR-TERMINAL TYPE

ABSOLUTE VALUE OF
RESISTANCE CHANGE RATIO

OFFSET FROM <110> [deg]

FIG.19A

SENSITIVITY OF n-Si (SHEARING STRESS)

FOUR-TERMINAL TYPE

ABSOLUTE VALUE OF RESISTANCE CHANGE RATIO

OFFSET FROM <110> [deg]

FIG.20B

SENSITIVITY OF n-Si (TENSILE STRESS)

FOUR-TERMINAL TYPE

ABSOLUTE VALUE OF RESISTANCE CHANGE RATIO

OFFSET FROM <110> [deg]

FIG.20A

SENSITIVITY OF p-Si
(TENSILE STRESS / SHEARING STRESS)

FIG.21A

SENSITIVITY OF n-Si
(TENSILE STRESS / SHEARING STRESS)

FIG.21B

EP 2 781 949 A1

FIG.22

FIG.23

FIG.24

FIG.25

FIG.26

FIG.27

FIG.28

FIG.29

**Europäisches Patentamt**
**European Patent Office**
**Office européen des brevets**

# EUROPEAN SEARCH REPORT

Application Number

EP 14 15 9822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2007 033000 A1 (BOSCH GMBH ROBERT [DE]) 22 January 2009 (2009-01-22) | 1,12,13 | INV. G02B26/08 |
| Y | * figures 1, 3 * <br> * paragraphs [0014], [0023] * | 2-11 | |
| Y | US 2002/044327 A1 (FUJITA HIROYUKI [JP] ET AL) 18 April 2002 (2002-04-18) <br> * figure 11B * <br> * paragraph [0002] * | 2,4-11 | |
| Y | DE 197 09 913 A1 (CMS MIKROSYSTEME GMBH CHEMNITZ [DE]) 1 October 1998 (1998-10-01) <br> * figure 1 * | 3 | |
| A | DE 10 2011 006337 A1 (BOSCH GMBH ROBERT [DE]) 4 October 2012 (2012-10-04) <br> * paragraph [0009] * | 1-13 | |
| A | US 2008/180771 A1 (WATANABE SHINICHIRO [JP] ET AL) 31 July 2008 (2008-07-31) <br> * paragraph [0104] * | 1-13 | |
| A | DE 10 2008 001465 A1 (BOSCH GMBH ROBERT [DE]) 5 November 2009 (2009-11-05) <br> * figures 2, 3 * | 1-13 | TECHNICAL FIELDS SEARCHED (IPC) <br> G02B |
| A | US 2011/249241 A1 (WAKABAYASHI SHUICHI [JP]) 13 October 2011 (2011-10-13) <br> * figure 20 * | 1-13 | |

The present search report has been drawn up for all claims

| Place of search | Date of completion of the search | Examiner |
|---|---|---|
| Munich | 1 July 2014 | Serbin, Jesper |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 15 9822

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2014

| Patent document cited in search report | Publication date | Patent family member(s) | | Publication date |
|---|---|---|---|---|
| DE 102007033000 A1 | 22-01-2009 | DE 102007033000 A1 | | 22-01-2009 |
| | | WO 2009010349 A1 | | 22-01-2009 |
| US 2002044327 A1 | 18-04-2002 | JP 2002116403 A | | 19-04-2002 |
| | | US 2002044327 A1 | | 18-04-2002 |
| DE 19709913 A1 | 01-10-1998 | NONE | | |
| DE 102011006337 A1 | 04-10-2012 | DE 102011006337 A1 | | 04-10-2012 |
| | | US 2012262775 A1 | | 18-10-2012 |
| US 2008180771 A1 | 31-07-2008 | JP 2008170565 A | | 24-07-2008 |
| | | US 2008180771 A1 | | 31-07-2008 |
| DE 102008001465 A1 | 05-11-2009 | DE 102008001465 A1 | | 05-11-2009 |
| | | WO 2009132719 A2 | | 05-11-2009 |
| US 2011249241 A1 | 13-10-2011 | BR PI1101874 A2 | | 04-09-2012 |
| | | JP 5447115 B2 | | 19-03-2014 |
| | | JP 2011221214 A | | 04-11-2011 |
| | | RU 2011113526 A | | 20-10-2012 |
| | | US 2011249241 A1 | | 13-10-2011 |

EPO FORM P0459

For more details about this annex : see Official Journal of the European Patent Office, No. 12/82

**EP 2 781 949 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003207737 A